(19) 

Europäisches
Patentamt
European
Patent Office
Office européen
des brevets

(11)  **EP 3 249 492 B1**

(12)  **EUROPEAN PATENT SPECIFICATION**

(45) Date of publication and mention
of the grant of the patent:
**23.01.2019  Bulletin 2019/04**

(51) Int Cl.:
*H02J 3/38* (2006.01)    *G05F 1/67* (2006.01)

(21) Application number: **17172860.3**

(22) Date of filing: **24.05.2017**

(54) **MAXIMUM POWER POINT TRACKING OF A PHOTOVOLTAIC GENERATOR BASED ON RESEARCH OF A TARGET RANGE**

MAXIMUM POWER POINT TRACKING FÜR EINEN PHOTOVOLTAISCHEN ERZEUGER, BASIEREND AUF DER SUCHE EINES ZIELBEREICHES

SUIVI DU POINT MAXIMAL DE PUISSANCE D'UN GÉNÉRATEUR PHOTOVOLTAÏQUE BASÉ SUR LA RECHERCHE D'UN DOMAINE CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **25.05.2016  IT UA20163806**

(43) Date of publication of application:
**29.11.2017  Bulletin 2017/48**

(73) Proprietor: **Ricerca sul Sistema Energetico - RSE S.p.A.**
**20134 Milano (IT)**

(72) Inventor: **MINUTO, Alessandro**
**I-20134 Milano (IT)**

(74) Representative: **Pezzoli, Ennio et al**
**c/o Maccalli & Pezzoli S.r.l.**
**Via Settembrini 40**
**20124 Milano (IT)**

(56) References cited:
**EP-A1- 2 395 550     WO-A1-2013/111044**
**US-A- 5 869 956**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The present disclosure relates to the field of photovoltaic generators. More specifically, this disclosure relates to the control of the photovoltaic generators.

Technological context

The background of the present disclosure is hereinafter introduced with the discussion of techniques relating to its context. However, even when this discussion refers to documents, acts, artifacts and the like, it does not suggest or represent that the discussed techniques are part of the prior art or are common general knowledge in the field relevant to the present disclosure.

The photovoltaic generators are commonly used to convert light energy into electrical energy (also known as solar generators for use with solar light); this allows generating energy in an ecological way and with reduced environmental impact.

Typically, each photovoltaic generator comprises a plurality of photovoltaic modules coupled to each other (for example, receivers connected in series). However, the receivers may be subject to a current mismatch of electrical and/or optical nature; particularly, this is mainly due to partial shading phenomena (for example, because of clouds, environmental obstacles, such as trees and buildings, and dirt being typical of traditional photovoltaic generators, opacification of lenses, errors of a solar tracking system being typical of concentration photovoltaic generators). As a result, the receivers may deliver different maximum values of current. With reference to a generic working point of the photovoltaic generator, in the presence of mismatch, the receivers that are not capable of delivering the current supplied by the photovoltaic generator are short-circuited by corresponding bypass diodes that protect them against reverse biasing.

The mismatches of the receivers cause corresponding (current) steps in a current-voltage characteristic of the photovoltaic generator, with a (power) maximum, or peak, in a power-voltage characteristic of the photovoltaic generator corresponding to each of them. In order to optimize the energy supplied by the photovoltaic generator, it should therefore operate in a working point (defined by a working current and a working voltage supplied by it) corresponding to the (global) absolute power peak of the power-voltage characteristic (maximum power point). However, the power-voltage characteristic of the photovoltaic generator varies continuously with the mismatches of its receivers (even very quickly in the case of photovoltaic generators of the concentration type).

Therefore, most of the photovoltaic generators are controlled with a Maximum Power Point Tracking (MPPT) technique, wherein the working point of the photovoltaic generator is continuously adjusted to keep it in correspondence thereto. For example, US-A-5869956 discloses to perform MPPT control under ordinary circumstances in order to extract maximum power from a solar cell. The MPPT techniques are generally based on a method known as Perturb-and-Observe (P&O). For this purpose, the working point is displaced slightly (rightwards or leftwards) and the corresponding power supplied by the photovoltaic generator is measured; if the power has increased the displacement of the working point continues in the same direction, whereas the displacement of the working point changes direction otherwise. The perturb-and-observe method is very simple to implement.

However, the perturb-and-observe method brings the photovoltaic generator to operate in correspondence to the first peak of the power-voltage characteristic that is encountered and that therefore may not be its absolute power peak (*i.e.,* the actual maximum power point). In order to avoid that the photovoltaic generator operates in correspondence to a relative power peak of the power-voltage characteristic, it is therefore necessary to search the maximum power point for initializing the perturb-and-observe method; the search for the maximum power point requires the exploration of the entire power-voltage characteristic in the first place. More sophisticated techniques allow finding the maximum power point with the exploration of a portion of the power-voltage characteristic (which, however, remains very large) or with an iterative process (which, however, involves a very large number of iterations). Moreover, the search for the maximum power point should be repeated whenever the environmental conditions undergo substantial changes (for example, a momentary darkening of the sky). This involves considerable losses of energy, since during the search for the maximum power point the photovoltaic generator operates far away from it.

The perturb-and-observe method is also rather inefficient. Indeed, if the displacements of the working point have low frequency and/or high pitch the convergence towards the maximum power point is slow; conversely, if the displacements of the working point have high frequency and/or low pitch the convergence towards the maximum power point is not very accurate. In this case as well, the differences between the working point and the maximum power point cause corresponding losses of energy (especially in the case of photovoltaic generators of the concentration type whose voltage-power characteristic may vary very quickly). These negative effects are particularly evident in the case of errors of the perturb-and-observe method; for example, this may happen in the presence of variations of the solar irradiance that modify the power supplied by the photovoltaic generator, so that the perturb-and-observe method might detect an increase or decrease thereof not corresponding to the actual slope of the power-voltage characteristic.

Summary

A simplified summary of the present disclosure is herein presented in order to provide a basic understanding thereof; however, the sole purpose of this summary is to introduce some concepts of the disclosure in a simplified form as a prelude to its following more detailed description, and it is not to be interpreted as an

In general terms, the present disclosure is based on the idea of determining a range wherein the maximum power point is tracked.

Particularly, an aspect provides a method for controlling a photovoltaic generator, wherein a target range of a corresponding operating characteristic is searched between a starting range and each range following the starting range according to a comparison with a corresponding relative critical mismatch of the photovoltaic generator (defined as a relative increase of the mismatch of each range making a power peak of the range equal to the power peak of a range following such range at the distance therefrom equal to an order of the relative critical mismatch), and then the power peak is tracked in the target range.

A further aspect provides a software program for implementing the method; a further aspect provides a corresponding software program product.

A further aspect provides a corresponding control system.

A further aspect provides an interface device comprising this control system.

A further aspect provides a photovoltaic system comprising this control system; a further aspect provides a photovoltaic system comprising this interface device.

More specifically, one or more aspects of the present disclosure are set out in the independent claims and advantageous features thereof are set out in the dependent claims, with the wording of all the claims that is herein incorporated *verbatim* by reference (with any advantageous feature provided with reference to any specific aspect that applies *mutatis mutandis* to every other aspect).

Brief description of drawings

The solution of the present disclosure, as well as further features and the advantages thereof, will be best understood with reference to the following detailed description thereof, given purely by way of a non-restrictive indication, to be read in conjunction with the accompanying drawings (wherein, for the sake of simplicity, corresponding elements are denoted with equal or similar references and their explanation is not repeated, and the name of each entity is generally used to denote both its type and its attributes - such as value, content and representation). In this respect, it is expressly intended that the figures are not necessary drawn to scale (with some details that may be exaggerated and/or simplified) and that, unless otherwise indicated, they are merely used to illustrate the structures and procedures described herein conceptually. Particularly:

FIG.1 shows a schematic block diagram of a photovoltaic system wherein the solution according to an embodiment of the present disclosure may be used,

FIG.2A-FIG.2H show combined diagrams relating to the operation of a photovoltaic generator to which the solution according to an embodiment of the present disclosure may be applied,

FIG.3 shows a schematic block diagram of a measuring block according to an embodiment of the present disclosure,

FIG.4 shows the main software components that may be used to implement the solution according to an embodiment of the present disclosure,

FIG.5 shows a state diagram describing the general principles of the solution according to an embodiment of the present disclosure, and

FIG.6A-FIG.6C, FIG.7A-FIG.7B show activity diagrams describing the flow of activities relating to an implementation of the solution according to an embodiment of the present disclosure.

Detailed description

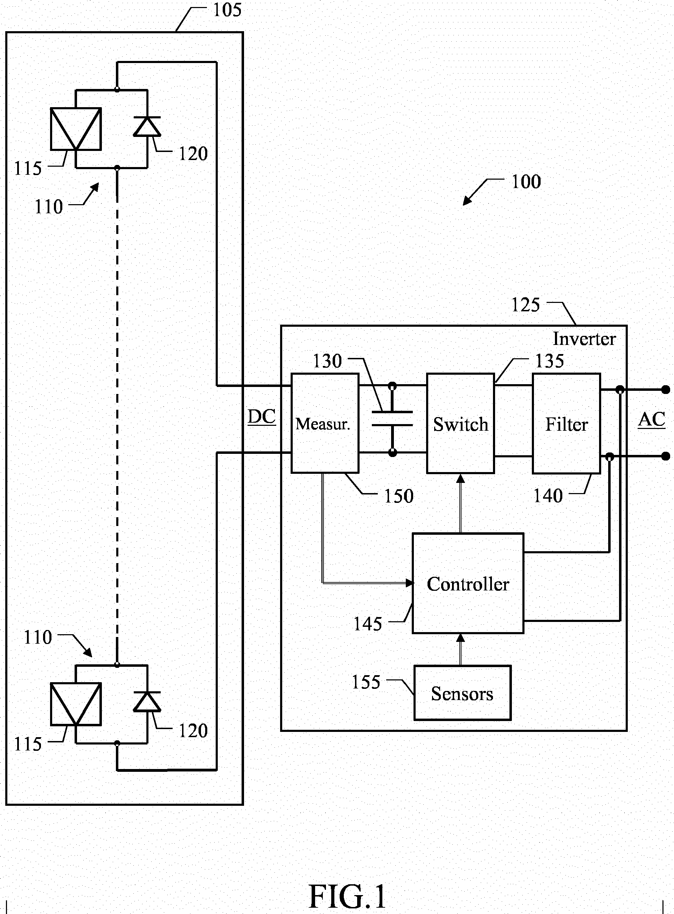

With reference in particular to FIG.1, a schematic block diagram is shown of a photovoltaic system 100 wherein the solution according to an embodiment of the present disclosure may be used.

The photovoltaic system 100 provides electrical energy (*i.e.,* current and voltage) of the alternating type, for example, to supply a distribution network or an accumulator (not shown in the figure).

The photovoltaic system 100 comprises a photovoltaic generator 105, which converts light energy (for example, provided by sunlight) into electrical energy of the direct type.

Typically, the photovoltaic generator 105 is a string that comprises a plurality of units connected in series (with each of them that may comprise, in turn, more subunits connected in parallel). Each unit is formed by a plurality of receivers 110 connected in series (for example, 12-48); each receiver 110 comprises a block of photovoltaic cells connected in series or in parallel to each other, indicated as a whole by the reference 115, in turn connected in antiparallel to a bypass diode 120. The photovoltaic cells 115 absorb sunlight and generate direct electrical energy by photovoltaic effect; for example, each photovoltaic cell 115 has a structure based on a single (PN) junction or on multiple junctions (comprising a plurality of junctions of different semiconductor materials) in traditional or concentration (CPV) technology. The bypass diode 120 instead serves to protect the photovoltaic cells 115 from a possible reverse biasing.

In case of (electrical/optical) mismatch between the receivers 110 (for example, because of partial shading phenomena of the photovoltaic cells 115), the maximum values of direct current that each receiver 110 is capable of delivering may be different. With reference to a generic working point of the photovoltaic generator 105, in mismatch condition, the receivers 110 that are capable of delivering the direct current with value equal to or higher than the one provided by the photovoltaic generator 105, in that working point, have at least part of their photovoltaic cells 115 forward biased (and therefore they are active contributing to the direct voltage supplied by the photovoltaic generator 105), whereas the other receivers 110 have their bypass diodes 120 forward biased so as to shunt the direct current for protecting them (and therefore they are inactive not contributing to the direct voltage supplied by the photovoltaic generator 105, apart from a voltage drop across the bypass diodes 120).

The photovoltaic system 100 further comprises an interface device for transferring the maximum power from the photovoltaic generator 105 to a load thereof defined by the electric network or the accumulator (for example, a DC-AC converter or a DC-DC converter, respectively). Particularly, the figure shows a DC-AC converter, for example, implemented by an inverter 125 that converts the direct electrical energy (input by the photovoltaic generator 105) into the alternating electrical energy (to be output). In particular, the inverter 125 is of the voltage source (VSI) type, wherein it is configured so that the photovoltaic generator 105 is seen as a (real) direct voltage generator and then it is current controlled; dual considerations apply in case the inverter 125 is of the current source (CIS) type.

In extremely simplified form, the inverter 125 comprises the following functional blocks. Particularly, a (DC-link) accumulation block 130 accumulates the direct electrical energy supplied by the photovoltaic generator 105 (into a capacitive structure schematically represented with a capacitor), so as to allow the inverter 120 to operate in conditions of direct voltage sufficiently stable with respect to its dynamics. A switching circuit 135 converts the direct voltage accumulated in the accumulation block 130 into square-wave voltage (corresponding to the desired alternating voltage), via the opening/closing of power components (for example, in a bridge configuration). A (block) filter 140 filters the square-wave voltage supplied by the switching block 135 so as to obtain the alternating voltage that is output. A controller 145 controls the switching circuit 135 to provide the desired alternating current/voltage (for example, with Pulse Width Modulation, PWM, technique). As far as relevant to the present disclosure, the controller 145 implements a maximum power point tracking (MPPT) technique, wherein it controls the photovoltaic generator 105 (by varying a load thereof defined by the inverter 125) to operate in correspondence to its maximum power point. The controller 145 measures the current/voltage being input by the photovoltaic generator 105 (for tracking the maximum power point) and the alternating current/voltage being output by the inverter 105 (for a feedback control thereof). In general, the controller 145 is provided with one or more microprocessors, a volatile working memory (RAM), a non-volatile mass memory (for example, an $E^2$PROM) for storing programs and data, and several input-output units (for example, a USB port for reading/writing removable memory devices such as a memory stick, a transceiver of the Wi-Fi type, a touch-screen).

In the solution according to an embodiment of the present disclosure, a measuring circuit 150 is interposed between the photovoltaic generator 105 and the controller 145. The measuring circuit 150 is used to measure, in addition to the direct current/voltage received from the photovoltaic generator 105 during its normal operation, the direct current/voltage received from the photovoltaic generator 105 in one or more limit conditions thereof (for example, a short-circuit current and an open-circuit voltage). Moreover, the controller 145 uses one or more environmental sensors 155 to measure corresponding environmental parameters at which the photovoltaic generator 105 operates (for example, solar irradiance, temperature, wind speed).

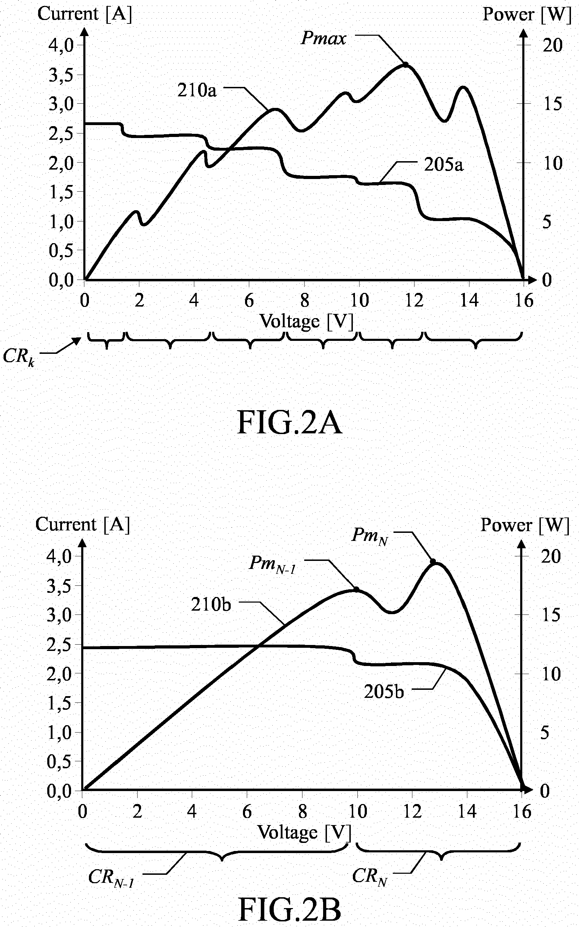

With reference now to FIG.2A-FIG.2H, combined diagrams are shown relating to the operation of a photovoltaic generator to which the solution according to an embodiment of the present disclosure may be applied.

These combined diagrams trace the values of the direct current (I) and the direct power (P) supplied by the photovoltaic generator on the ordinate axis (in A and in W, respectively) as a function of the values of the direct voltage (V) supplied by the photovoltaic generator on the abscissa axis (in V).

Particularly, the combined diagram of FIG.2A represents an (output) current-voltage characteristic of the photovoltaic generator (i.e., the current I as a function of the voltage V) with an I-V curve 205a and an (output) power-voltage characteristic of the photovoltaic generator (i.e., the power P as a function of the voltage V) with a P-V curve 210a.

In general, the photovoltaic generator comprises N receivers having mismatches $M_k$ (with $k=1..N$), which are ranked according to the index $k$ (in increasing order of its value). Particularly, the receivers having the highest maximum value of the current that they are capable of delivering (deliverable current $Im_k$) are deemed without mismatch; the receivers having the deliverable current $Im_k$ lower than the one of the receivers without mismatch are instead deemed with mismatch, of value and order increasing with the reduction of their deliverable current $Im_k$ with respect to that of the receivers without mismatch (for example, as a percentage with respect to the latest one) up to the receivers with maximum mismatch having the lowest deliverable current $Im_k$.

Considering initially the *I-V* curve 205a, starting from a short-circuit condition wherein the photovoltaic generator supplies a corresponding maximum value of the current (short-circuit current *Isc*), one or more receivers (without mismatch) that are capable of delivering such current (*i.e.,* whose deliverable current is higher than or equal to it) are active while the other receivers (with mismatch) are inactive. The active receivers behave as current generators in a certain voltage range (wherein the *I-V* curve 205 has a corresponding portion with substantially constant current, or plateau), beyond which the current supplied by the active receivers decreases sharply (wherein the *I-V* curve 205a has a corresponding portion with approximately inverse exponential trend, or step) until one or more receivers with the mismatch immediately higher are activated (so as to contribute to the voltage *V* consequently limiting the current I). As the voltage *V* further increases, there is a similar behavior with the activation in succession of the receivers having increasing mismatches, until (with all receivers being active) an open-circuit condition is reached wherein the photovoltaic generator supplies a corresponding maximum value of the voltage (open-circuit voltage *Voc*).

Therefore, the *I-V* curve 205a is composed of the union of homogeneous sections in consecutive ranges of voltage V (each comprising a corresponding plateau followed by a step of the current I), hereinafter referred to as canonical ranges $CR_k$ of order *k,* wherein each canonical ranges $CR_k$ is defined by the range of voltage *V* in which *k* receivers (with mismatch lower than or equal to a value that defines a mismatch of the canonical ranges $CR_k$, indicated with $M_k$) are active, and then *N-k* receivers (with mismatch higher than the mismatch $M_k$) are inactive. The canonical ranges $CR_K$ (and then the steps of the I-V curve) are equal in number to the different values of the mismatches $M_k$, comprised the null one (six in the example at issue); therefore, the number of the canonical ranges $CR_K$ is at most equal to that of the receivers, namely, equal to *N* when all the receivers have different mismatches or lower than *N* when two or more receivers have equal mismatch. As described in the following, for each working point of the photovoltaic generator, defined by the set value of the current I (working current *Iw*) and the corresponding value of the voltage *V* (working voltage *Vw*) according to its *I-V* curve, it is possible to determine the canonical range $CR_K$ to which the working point *Iw/Vw* belongs (working range *CRw*) via a mathematical model of the photovoltaic generator (even without knowing its *I-V* curve).

Passing to the *P-V* curve 210a, in correspondence to the plateaus of the *I-V* curve 205a the power *P* increases in a substantially linear way with the voltage *V*, and in correspondence to the steps of the *I-V* curve 205a the power *P* decreases in roughly inverse exponential way. In each canonical range $CR_k$, the *P-V* curve 210a thus has a power peak (maximum) $Pm_k$ in correspondence to a knee thereof, between the plateau and the step; one (or more) of the power peaks is absolute or global (maximum power point *Pmax*), whereas the others power peaks $Pm_k$ are relative or local. Therefore, the number of the power peaks $Pm_k$ as well is at most equal to that of the receivers, *i.e.,* equal to *N* when all the receivers have different mismatches or lower than *N* when two or more receivers have equal mismatch. Each power peak $Pm_k$ (in the canonical range $CR_k$ with mismatch $M_k$) is independent of the mismatches $M_{succ}$ (with $k+1 \leq succ \leq N$), higher than the mismatch $Mk$, of any canonical range $CR_{succ}$ of higher order (following ranges, to the right); indeed, in the canonical range $CR_k$ all the receivers of the following ranges $CR_{succ}$ are always inactive, so that they do not contribute in any way to the power *P* supplied by the photovoltaic generator.

The case is considered now of a single canonical range $CR_N$ with mismatch (last range), in addition to a canonical range $CR_{N-1}$ of a lower order (previous range, to the left) without mismatch ($M_{N-1}=0$). In this condition, the power peak $Pm_{N-1}$ in the previous range $CR_{N-1}$ is independent of the mismatch $M_N$ of the last range $CR_N$ (since following it), so that as this mismatch $M_N$ varies only the corresponding power peak $Pm_N$ varies (whereas the power peak $Pm_{N-1}$ remains unchanged).

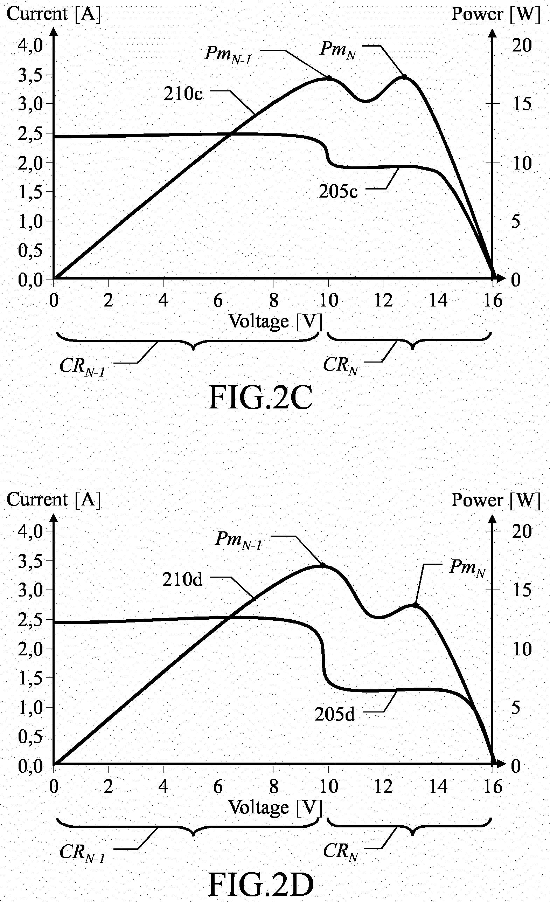

Starting from a condition wherein the mismatch $M_N$ is very low, the power peak $Pm_N$ is higher than the power peak $Pm_{N-1}$ (since in the last range $CR_N$ the receivers with mismatch $M_N$ that activate increase the voltage *V* without substantially limiting the current *I*); for example, FIG.2B shows an *I-V* curve 205b and a *P-V* curve 210b corresponding to the case with mismatches $M_{N-1}=0$ and $M_N=15\%$. As the mismatch $M_N$ increases the power peak $Pm_N$ decreases (since the receivers with mismatch $M_N$ limit the current *I* more and more), until the power peak $Pm_N$ becomes equal to the power peak $Pm_{N-1}$; simulations have demonstrated that the mismatch $M_N$ that makes the power peak $Pm_N$ equal to the power peak $Pm_{N-1}$ is substantially independent of the mismatches of the receivers of the photovoltaic generator, *i.e.,* it is a characteristic value thereof that is hereinafter referred to as absolute critical mismatch *Mca.* For example, FIG.2C shows an *I-V* curve 205c and a *P-V* curve 210c corresponding to the case with mismatches $M_{N-1}=0$ and $M_N=25\%$, with the latter that defines the absolute critical mismatch *Mca=25%*. As the mismatch $M_N$ further increases, the power peak $Pm_N$ further decreases, becoming lower than the power peak $Pm_{N-1}$; for example, FIG.2D shows an *I-V* curve 205d and a *P-V* curve 210d corresponding to the case with mismatches $M_{N-1}=0$ and $M_N=35\%$.

Therefore, if the mismatch $M_N$ is lower than (equal to) the absolute critical mismatch *Mca* the power peak $Pm_N$ is higher than (equal to) the power peak $Pm_{N-1}$, whereas if the mismatch $M_N$ is higher than (equal to) the absolute critical mismatch *Mca* the power peak $Pm_N$ is lower than (equal to) the power peak $Pm_{N-1}$.

The more general case is now considered of the last canonical range $CR_N$ preceded by two or more preceding ranges $CR_{prec}$ (with $1 \leq prec < N$), the first of them without mismatch and the others with mismatch. In this condition, the additional receivers with mismatch that precede the receivers with mismatch $M_N$ have the effect of reducing especially the power peaks $Pm_{prec}$ of the preceding ranges $CR_{prec}$ (since in them the further receivers with mismatch accordingly reduce the voltage $V$ when they are inactive or the current $I$ when they are active, whereas in the last canonical range $CR_N$ the current $I$ is already more limited by the receivers with mismatch $M_N$).

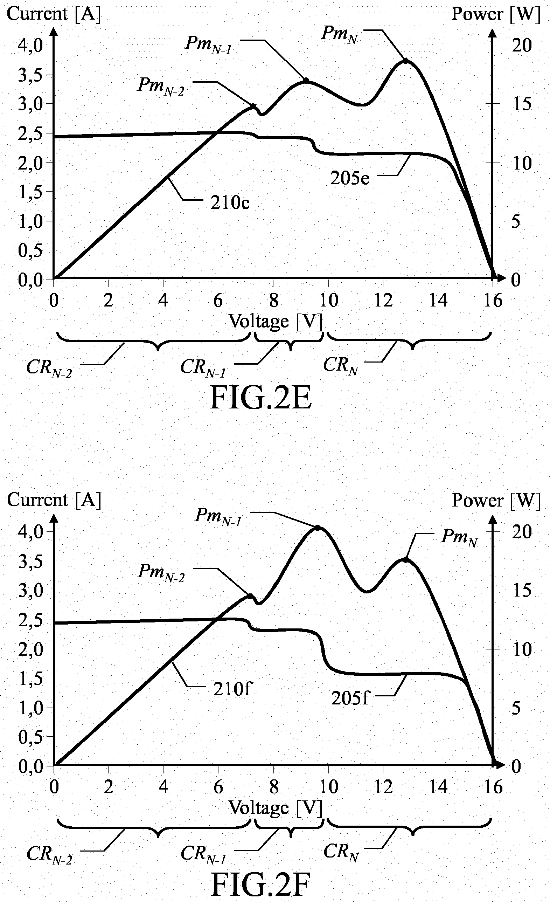

Therefore, if the mismatch $M_N$ is lower than or equal to the absolute critical mismatch $Mca$ the power peak $Pm_N$ is still higher than the power peaks $Pm_{prec}$. If instead the mismatch $M_N$ is higher than the absolute critical mismatch $Mca$ it is no longer possible to establish with certainty the relation between the power peak $Pm_N$ and the power peaks $Pm_{prec}$ (since one or more of the power peaks $Pm_{prec}$ might have become lower than the power peak $Pm_N$). For example, FIG.2E shows an $I$-$V$ curve 205e and a $P$-$V$ curve 210e corresponding to the case with mismatches $M_{N-3}=0$, $M_{N-2}=5\%$, $M_{N-1}=8\%$, $M_N=35\%$ and absolute critical mismatch $Mca=25\%$; despite the mismatch $M_N$ is higher than the absolute critical mismatch $Mca$, the power peaks $Pm_{N-3}$- $Pm_{N-1}$ are nevertheless lower than the power peak $Pm_N$.

Considering now any other canonical range $CR_k$ (with $1 < k < N$), simulations have shown that in this case as well the same result is obtained if the voltage drops on the bypass diodes are disregarded; namely, starting from a condition wherein the mismatch $M_k$ is very low, the mismatch $M_k$ that reduces the power peak $Pm_k$ down to make it equal to the power peak $Pm_{prec}$ of a preceding range $CR_{prec}$ is substantially equal to the absolute critical mismatch $Mca$ (as defined above in relation to the last range $CR_N$). Considering instead the voltage drops on the bypass diodes as well, they reduce the power peak $Pm_k$ moving leftwards; therefore, the mismatch $M_k$ that reduces the power peak $Pm_k$ down to make it equal to the power peak $Pm_{prec}$ of a preceding range $CR_{prec}$ is substantially higher than the absolute critical mismatch $Mca$. Therefore, a fortiori, if the mismatch $M_k$ is lower than or equal to the absolute critical mismatch $Mca$ the power peak $Pm_k$ is higher than the power peaks $Pm_{prec}$.

In view of the above, if the mismatch $M_k$ of a generic canonical range $CR_k$ is lower than or equal to the absolute critical mismatch $Mca$, no power peak $Pm_{prec}$ exists higher than the power peak $Pm_k$ of such canonical range $CR_k$ in any preceding range $CR_{prec}$ (to the left).

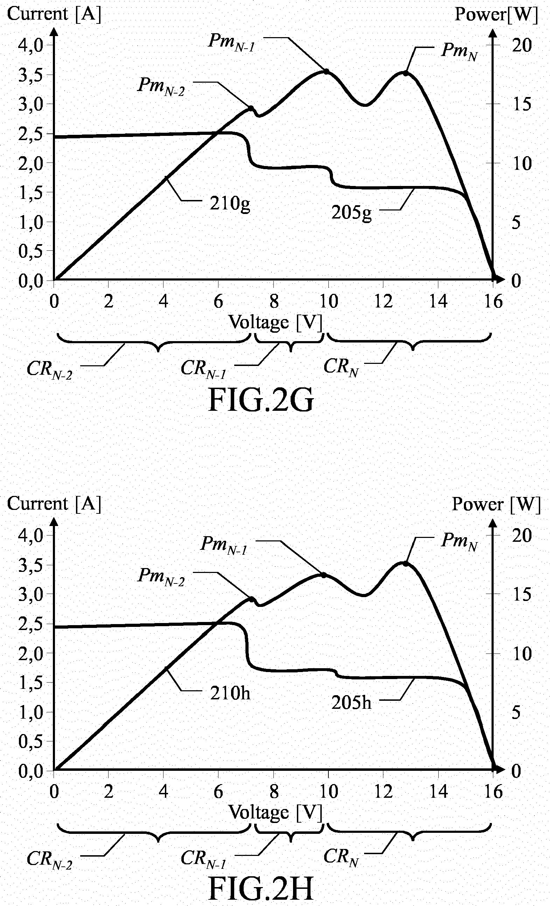

Two consecutive canonical ranges are now considered of generic order $CR_k$ and $CR_{k+1}$ (with $1 \leq k < N$) having mismatches $M_k$ and $M_{k+1}$, respectively. Starting from a condition wherein the mismatch $M_k$ is very low, the power peak $Pm_k$ of the canonical range $CR_k$ is higher than the power peak $Pm_{k+1}$ of the canonical range $CR_{k+1}$ (since whereas in the canonical range $CR_{k+1}$ the receivers with mismatch $M_{k+1}$ substantially limit the current $I$, that does not happen in this case in the canonical range $CR_k$ by the receivers with mismatch $M_k$). For example, FIG.2F shows an $I$-$V$ curve 205f and a $P$-$V$ curve 210f corresponding to the simplest case with only two canonical ranges $CR_{N-1}$ and $CR_N$ with mismatch $M_{N-1}=20\%$ and (maximum) mismatch $M_N=60\%$, respectively, in addition to a canonical range $CR_{N-2}$ without mismatch $M_{N-2}=0$. As the mismatch $M_k$ increases especially the power peak $Pm_k$ decreases (since in the canonical range $CR_k$ the receivers with mismatch $M_k$ limit the current $I$ more and more, whereas in the canonical range $CR_{k+1}$ the current $I$ is already more limited by the receivers with mismatch $M_{k+1}$), until the power peak $Pm_k$ becomes equal to the power peak $Pm_{k+1}$; simulations have shown that a (mismatch) relative difference, between the mismatch $M_{k+1}$ and the mismatch $M_k$ (for example, as a percentage with respect to the mismatch $M_k$), which makes the power peak $Pm_k$ equal to the power peak $Pm_{k+1}$ is substantially independent of the mismatches of the receivers of the photovoltaic generator, i.e., it is a characteristic value thereof as well that is hereinafter referred to as relative critical mismatch $Mcr(1)$ of first order. For example, FIG.2G shows an $I$-$V$ curve 205g and a $P$-$V$ curve 210g corresponding to the case with mismatches $M_{N-2}=0$, $M_{N-1}=51\%$ and $M_N=60\%$, wherein the relative critical mismatch $Mcr(1)$ is, for example, $Mcr(1)=(0,60-0,51)/(1-0,51)=18,4\%$. As the mismatch $M_k$ further increases the power peak $Pm_k$ further decreases, becoming lower than the power peak $Pm_{k+1}$; for example, FIG.2H shows an $I$-$V$ curve 205h and a $P$-$V$ curve 210h corresponding to the case with mismatches $M_{N-2}=0$, $M_{N-1}=56\%$ and $M_N=60\%$.

Therefore, if the relative difference of the mismatches $M_{k+1}$ and $M_k$ is lower than (equal to) the relative critical mismatch $Mcr(1)$ the power peak $Pm_{k+1}$ is higher than (equal to) the power peak $Pm_k$, whereas if the relative difference of the mismatches $M_{k+1}$ and $M_k$ is higher than (equal to) the relative critical mismatch $Mcr(1)$ the power peak $P_{Mk+1}$ is lower than (equal to) the power peak $Pm_k$.

Similar considerations apply to the case of two generic canonical ranges $CR_k$ and $CR_{k+d}$ (with mismatches $M_k$ and $M_{k+d}$, respectively) whose orders differ by any number $d$ (with $d=1...N-2$), i.e., they are separated by $d-1$ intermediate canonical ranges. In this case as well a relative critical mismatch $Mcr(d)$ of order $d$ exists defined by a (mismatch) relative difference, between the mismatch $M_{k+d}$ and the mismatch $M_k$, which makes the power peak $Pm_k$ equal to the power peak $Pm_{k+d}$.

Therefore, if the relative difference of the mismatches $M_{k+d}$ and $M_k$ is lower than (equal to) the relative critical mismatch $Mcr(d)$ the power peak $Pm_{k+d}$ is higher than (equal to) the power peak $Pm_k$, whereas if the relative difference of the mismatches $M_{k+d}$ and $M_k$ is higher than (equal to) the relative critical mismatch $Mcr(d)$ the power peak $Pm_{k+d}$ is lower than (equal to) the power peak $Pm_k$.

In view of the above, for a generic canonical range $CR_k$, the power peak $Pm_{k+d}$ of a following canonical range

$CR_{k+d}$ (of the *d-th* order) is higher than the power peak $Pm_k$ of such canonical range $CR_k$ if and only if the relative difference of the mismatches $M_{k+d}$ and $M_k$ is lower than the relative critical mismatch $Mcr(d)$ of the same order *d*.

Consequently, it is possible to determine (without the need of knowing the power peaks $Pm_k$) the canonical range wherein the maximum power point is (hereinafter, referred to as target range $CR_{target}$). In this respect, a canonical range is considered corresponding to the absolute critical mismatch *Mca* of the photovoltaic generator (hereinafter, referred to as starting range $CR_{start}$). The maximum power point may not be in the preceding ranges $CR_{prec}$ (if any) of the starting range $CR_{start}$; indeed, the power peaks $Pm_{prec}$ of these preceding ranges $CR_{prec}$ may not be higher than the power peak of the starting range $CRstart$ ($Pm_{start}$). The target range $CR_{target}$ is then searched among the starting range $CR_{start}$ and each (possible) following range $CR_{start+d}$ thereof according to a comparison of the relative difference of the mismatches $M_{start+d}$ and $M_{start}$ with the relative critical mismatch $Mcr(d)$ of order *d* equal to the distance between the following range $CR_{start+d}$ and the starting range $CR_{start}$ (by exploiting the fact that the power peaks increase moving rightwards only when the corresponding mismatch relative difference is lower than the corresponding relative critical mismatch). Once determined the target range $CR_{target}$, the photovoltaic generator may be controlled to operate in the neighborhood of the working point *Iw/Vw* corresponding to its power peak $Pm_{target}$, which is then the maximum power point of the entire *P-V* curve.

The above-mentioned solution allows bringing the photovoltaic generator to operate to the maximum power point quickly, with a reduced number of iterations (up to a few units) during which the photovoltaic generator operates away from it; this involves a substantial reduction of the corresponding losses of energy.

This solution is particularly efficient. Indeed, the working point may be moved with high frequency and/or reduced pitch for tracking the maximum power point, so that the convergence towards it may be fast and accurate; in this case as well, the reduced differences between the working point and the maximum power point reduce the corresponding losses of energy (especially in the case of photovoltaic generators of the concentration type whose voltage-power characteristic may vary very quickly). Moreover, this substantially mitigates the negative effects of any errors in the tracking of the maximum power point (for example, caused by variations of the solar irradiance that modify the power supplied by the photovoltaic generator).

All of the above substantially increases an energy efficiency of the entire photovoltaic system.

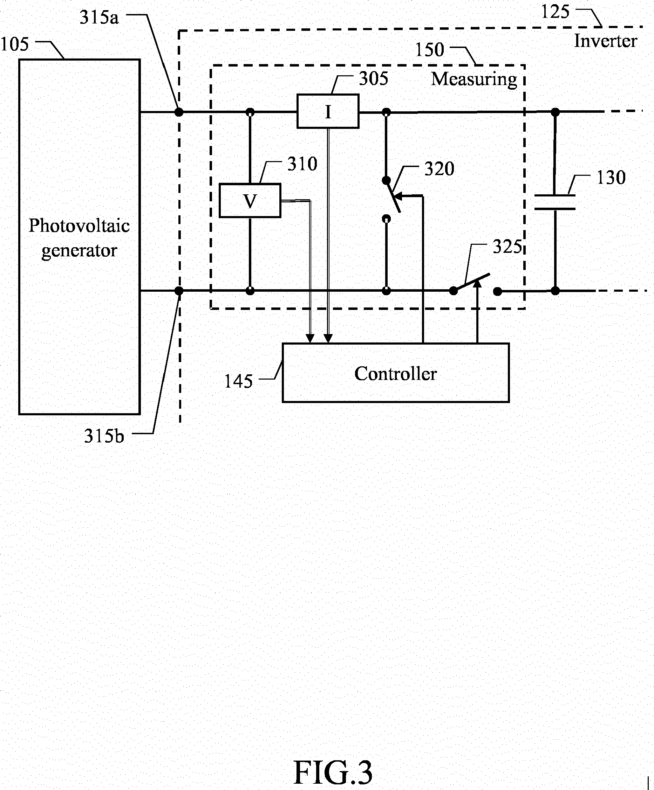

With reference now to FIG.3, a schematic block diagram is shown of the measuring circuit 150 according to an embodiment of the present disclosure.

The measuring circuit 150 is used for measuring the working current Iw, the working voltage Vw, the short-circuit current *Isc* and the open-circuit voltage *Voc*. For this purpose, the measuring circuit 150 comprises a current meter 305 and a voltage meter 310, which are coupled with the controller 145 to measure the current *I* and the voltage *V*, respectively, at two input terminals 315a and 315b of the inverter 125 (coupled with corresponding output terminals of the photovoltaic generator 105). In the solution according to an embodiment of the present disclosure, the measuring circuit 150 further comprises two switches 320 and 325 that are controlled by the controller 145.

Particularly, the current meter 305 is coupled between the input terminal 315a and a terminal of the accumulation block 130 (in series to the photovoltaic generator 105); the voltage meter 310 is coupled between the input terminals 315a and 315b (in parallel to the photovoltaic generator 105). The switch 320 is coupled between the input terminal 315b and the same terminal of the accumulation block 130 with which the current meter 305 is coupled; the switch 325 is coupled between the input terminal 315b and another terminal of the accumulation block 130.

During the normal operation of the photovoltaic generator 105, the switch 320 is open and the switch 325 is close. In this condition, the switches 320,325 do not interfere with the accumulation of the (direct) electrical energy supplied by the photovoltaic generator into the accumulation block 130, so that they are opaque to the operation of the inverter 125; therefore, the current meter 305 measures the working current Iw and the voltage meter 310 measures the working voltage Vw.

When it is necessary to measure the short-circuit current Isc, the switch 320 is closed and the switch 325 is opened. In this condition, the photovoltaic generator 105 in series with the current meter 305 are short circuited (onto the input terminals 315a, 315b) by the switch 320 and they are insulated from the accumulation block 130 by the switch 325; therefore, the current meter 305 measures the short-circuit current *Isc* (whereas the voltage meter 310 measures a null value). At the same time, assuming that such a measurement is sufficiently fast (for example, of the order of 0.5-2 ms in case wherein the photovoltaic generator 105 is of the concentration type), the inverter 125 may continue to supply (alternating) electrical energy with a negligible loss of charge of the accumulation block 130 (even if it does not receive electrical energy from the photovoltaic generator 105).

When it is necessary to measure the open-circuit voltage *Voc*, both the switches 320 and 325 are opened. In this condition, the photovoltaic generator 105 in parallel to the voltage meter 310 are insulated from the accumulation block 130; therefore, the voltage meter 310 measures the open-circuit voltage *Voc* (whereas the current meter 305 measures a null value). As above, assuming that such a measurement is sufficiently fast, the inverter 125 may continue to supply electrical energy with a negligible loss of charge of the accumulation block 130 (even if it does not receive electrical energy from the photovoltaic generator 105).

The above-described structure thus allows measuring the short-circuit current *Isc* and the open-circuit voltage *Voc* without substantially interfering with the normal operation of the inverter 105.

Alternatively (not shown in the figure) the short-circuit current *Isc* and the open-circuit voltage *Voc* may be estimated using a (dedicated) reference photovoltaic cell. The reference photovoltaic cell is substantially equal to those of the photovoltaic generator, and it is arranged (stand-alone) in a position without any environmental obstacles (in order to ensure that it is never shaded in the absence of clouds). A simple measuring circuit is used to measure a short-circuit current and an open-circuit voltage of the reference cell. The short-circuit current Isc and the open-circuit voltage *Voc* (of the photovoltaic generator) are set equal to the short-circuit current of the reference cell and to the product of the open-circuit voltage of the reference cell by the number of receivers *N*. This structure is more simple and cost effective (to the detriment of a lower accuracy, for example, in conditions of partial shading).

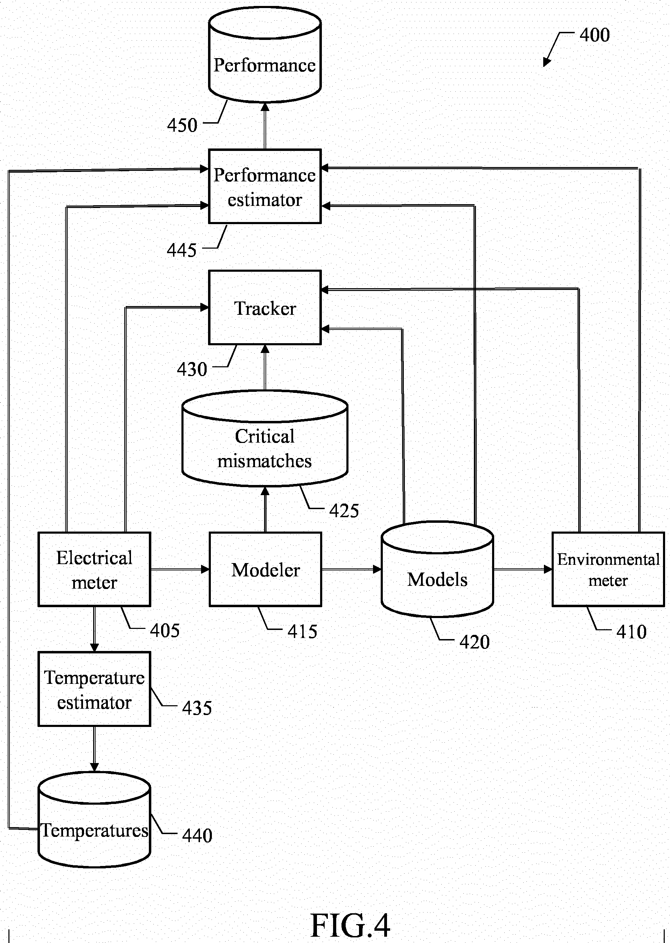

With reference now to FIG.4, the main software components are shown that may be used to implement the solution according to an embodiment of the present disclosure.

Particularly, all the software components (programs and data) are denoted as a whole with the reference 400. The software components are typically stored in the mass memory and loaded (at least partially) into the working memory of the controller when the programs are running. The programs are initially installed into the mass memory, for example, from removable storage units or from a network. In this respect, each program may be a module, segment or portion of code, which comprises one or more executable instructions for implementing the specified logical function.

An electrical meter 405 measures or calculates the values of one or more electrical parameters of the photovoltaic generator; for example, the electrical meter 405 measures the current *I* and the voltage *V* and it calculates the corresponding power $P=V \cdot I$. An environmental meter 410 instead measures the values of one or more environmental parameters at which the photovoltaic generator is operating; for example, the environmental meter 410 measures a direct irradiance (*DNI*), a global irradiance (*GNI*), a rear temperature of the cells (*Tback*), an air temperature (*Tair*) and a wind speed (v).

A modeler 415 exploits the electrical meter 405 to determine the mathematical model of the photovoltaic generator (defined by the values of corresponding modeling parameters) and to calculate its absolute critical mismatch *Mca* and relative critical mismatch *Mcr(1)* of first order (from which the relative critical mismatches of higher order are calculated). The modeler 415 controls (in write mode) a model repository 420 wherein one or more definitions of the mathematical model are stored. For example, the model repository 420 logs different versions of the mathematical model for corresponding values of the rear temperature (*Tback*); all the models are defined by constant modeling parameters (for example, provided by a manufacturer of the photovoltaic generator), such as number of receivers N, area of the photovoltaic cells *A,* ideality factor of the bypass diodes (bypass ideality factor $n_{by}$) and reverse saturation current of the bypass diodes (bypass saturation current $I_{0by}$), whereas each specific mathematical model is defined by corresponding variable modeling parameters (determined by the modeler 415), such as equivalent series resistance of the receivers and of the wirings of the photovoltaic system (series resistance *Rs*), equivalent ideality factor of the cells (junction ideality factor $n_{eq}$), reference value of a junction temperature of the cells (reference temperature *Tjr*), temperature coefficient in open-circuit conditions and in correspondence to the short-circuit current *Isc* (temperature coefficient *βr*), open-circuit voltage corresponding to the short-circuit current *Isc* and to the reference temperature *Tjr* (reference voltage *Vocr*) and short-circuit current corresponding to the reference voltage *Vocr* and to reference temperature *Tjr* (reference current *Iscr*). Moreover, the modeler 415 controls a critical mismatch repository 425 wherein the absolute critical mismatch *Mca* and the relative critical mismatch *Mcr(1)* are stored.

A tracker 430 tracks the maximum power point of the photovoltaic generator. For this purpose, the tracker 430 exploits the electrical meter 405 and the environmental meter 410, and it accesses the model repository 420 and the critical mismatch repository 425. A temperature estimator 435 estimates the junction temperature at which the cells of the photovoltaic generator operate; for this purpose, the temperature estimator 435 as well exploits the electrical meter 405. The temperature estimator 435 logs the values of the junction temperature (*Tj*) estimated over time into a junction temperature repository 440. A performance estimator 445 estimates one or more performance indicators of the photovoltaic generator under standard conditions; for example, the standard conditions are Standard Test Conditions (STC), referred to junction temperature *Tj=25°C,* direct irradiance $DNI=1,000 \ W/m^2$ and reference solar spectrum with air mass *AM=1.5D,* and Standard Operating Conditions (SOC), referred to air temperature *Tair=20°C,* direct irradiance $DNI=900 \ W/m^2$, wind speed *v<2 m/s* and reference solar spectrum with air mass *AM=1.5D,* whereas the performance indicators are the maximum power (*Pmax*) and the efficiency (*EFF*). For this purpose, the performance estimator 445 exploits the electrical meter 405 and the environmental meter 410, and it accesses the model repository 420 and the junction temperature repository 440. The performance estimator 445 logs the values of the performance indicators estimated over time into a performance repository 450.

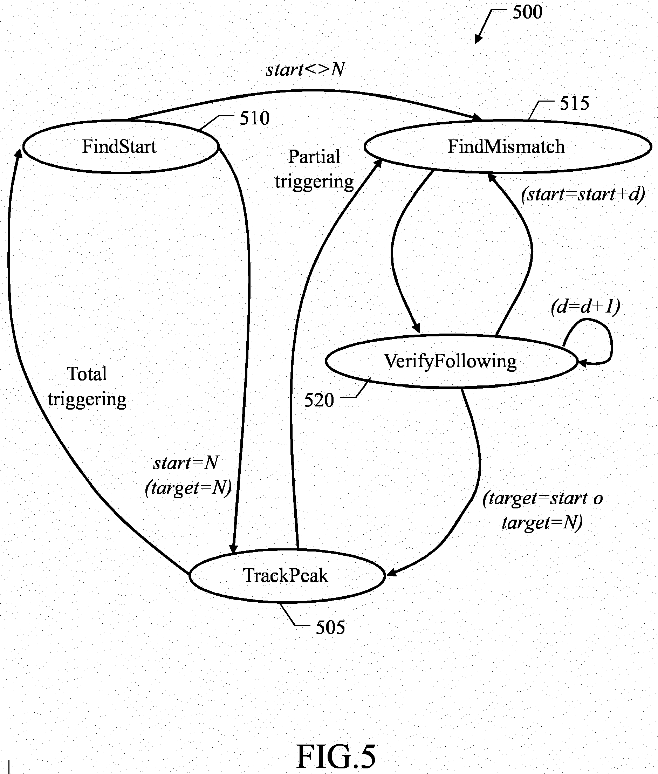

With reference now to FIG.5, a state diagram is shown describing the general principles of the solution according to an embodiment of the present disclosure.

Particularly, the state diagram 500 describes the control logic of the photovoltaic generator for tracking the maximum power point by means of a finite-state (abstract) machine that may be implemented by the controller of the inverter.

The finite-state machine is normally in a state 505 (*TrackPeak*) for tracking the maximum power point (in the target range $CRt_{arget}$ previously determined). The finite-state machine starts a total searching procedure of the target range $CRt_{arget}$ when a total triggering condition occurs, depending on variations over time of one or more electrical parameters and/or environmental parameters; in this way, the target range $CRt_{arget}$ is searched whenever such variations cause a change in the *P-V* curve to the left of the working point *Iw/Vw* (which might move the maximum power point into a canonical range $CR_k$ preceding the target range $CRt_{arget}$).

In response thereto, the finite-state machine passes from the state 505 to a state 510 (*FindStart*) for determining the starting range $CR_{start}$; the starting range $CR_{start}$ is determined as the one whose mismatch $M_{start}$ is lower than or equal to the absolute critical mismatch *Mca*. If the starting range $CR_{start}$ is equal to the last range $CR_N$ (*start=N*) it is identified directly as the target range $CR_{target}$ (*target=N*), because the power peaks $Pm_{prec}$ of the (possible) preceding ranges $CR_{prec}$ may not be higher than the power peak $Pm_{start}$ of the starting range $CR_{start}$; in this condition, the finite-state machine directly returns from the state 510 to the state 505.

Conversely (*start<>N*), the finite-state machine passes from the state 510 to a state 515 (*FindMismatch*) for determining the mismatch $M_{start}$ of the starting range $CR_{start}$. The same state 515 is also reached from the state 505 when a partial triggering condition occurs (periodically), so as to start a partial searching procedure of the target range $CR_{target}$. This is used to verify possible changes in the *P-V* curve to the right of the working point *Iw/Vw,* which are not detected by the total triggering conditions; therefore, in this case the search of the target range $CR_{target}$ may start directly from its current position set as the starting range $CR_{start}$ (so that even if in this case the search of the target range $CR_{target}$ is very often useless it has an effect substantially negligible on the energy efficiency of the photovoltaic system).

The finite-state machine then passes from the state 515 to a state 520 (*VerifyFollowing*) for verifying the following ranges $CR_{start+d}$ of the starting range $CR_{start}$. For this purpose, the following ranges $CR_{start+d}$ are verified in succession (*d=d +1*), each according to the comparison of the relative difference of the mismatches $M_{start+d}$ and $M_{start}$ with the corresponding relative critical mismatch *Mcr(d);* such verification is performed starting from the first following range $CR_{start+1}$ until the last range $CR_N$ is reached. During this verification, if the relative difference of the mismatches $M_{start+d}$ and $M_{start}$ is lower than the relative critical mismatch *Mcr(d),* and thus the power peak $Pmstart+d$ is higher than the power peak $Pm_{start}$, the starting range $CRstart$ is moved to the following range $CR_{start+d}$ (*start=start+d*) and the finite-state machine returns to the state 515 to repeat the same operations starting from it. With reference again to the state 520, once the comparison with the last range $CR_N$ has been performed, so that no other following range $CR_{start+d}$ may have its power peak $Pm_{start+d}$ higher than the power peak $Pm_{start}$, the target range $CRtarget$ is identified with the last range $CR_N$ (*target=N*) if the relative difference of the mismatches $M_N$ and $M_{start}$ is lower than the relative critical mismatch *Mcr(N-start)* (because the power peak $Pm_N$ is higher than the power peak $Pm_{start}$) or the target range $CR_{target}$ is identified with the starting range $CR_{start}$ (*target=start*) otherwise (because the power peak $Pm_N$ as well is not higher than the power peak $Pm_{start}$); the finite-state machine then passes from the state 520 to the state 505.

The above-described solution further improves the performance, because it limits the passages across the state 515 for determining the mismatch $M_{start}$ of the starting range $CR_{start}$ (which typically requires a higher number of iterations).

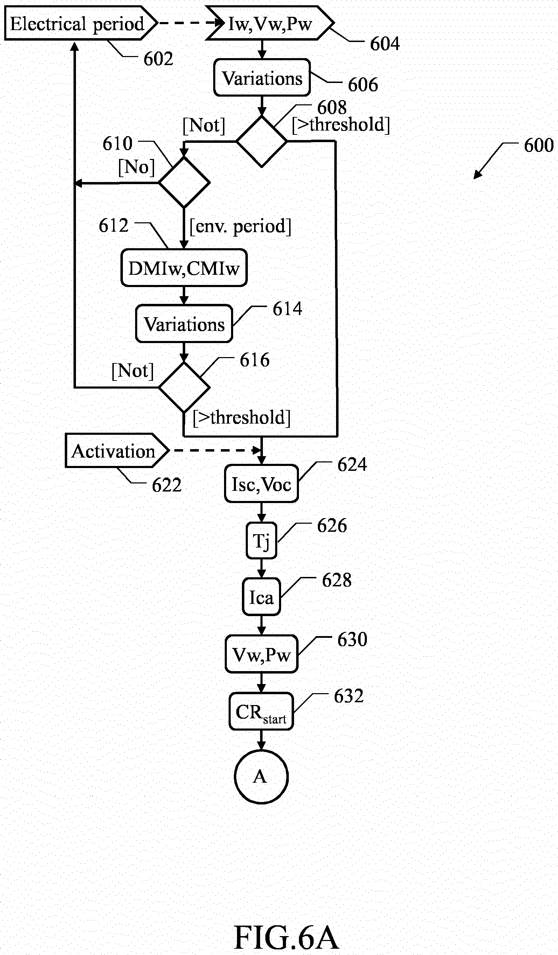

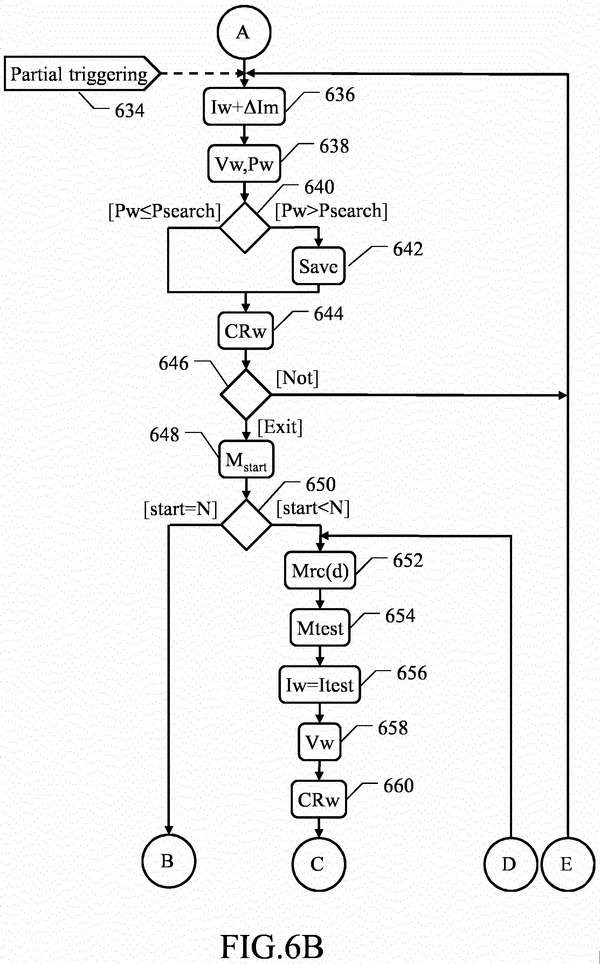

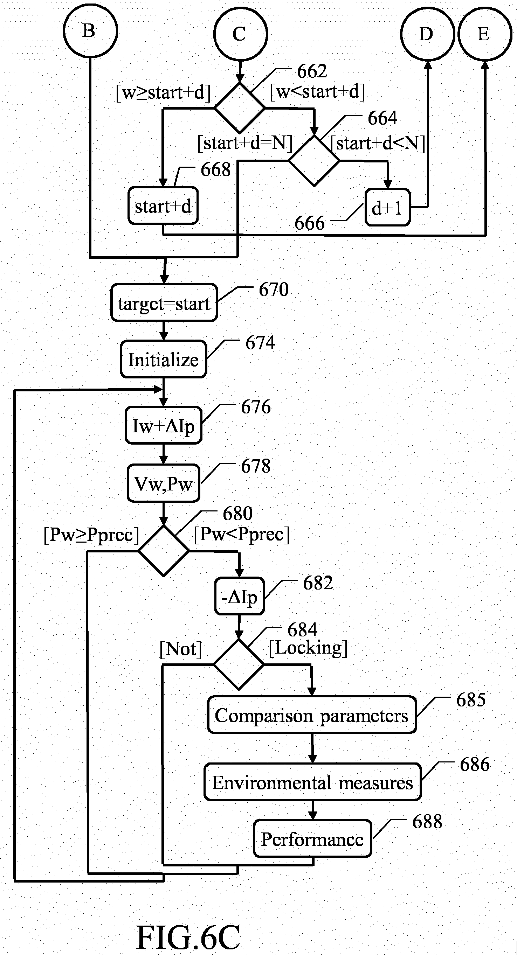

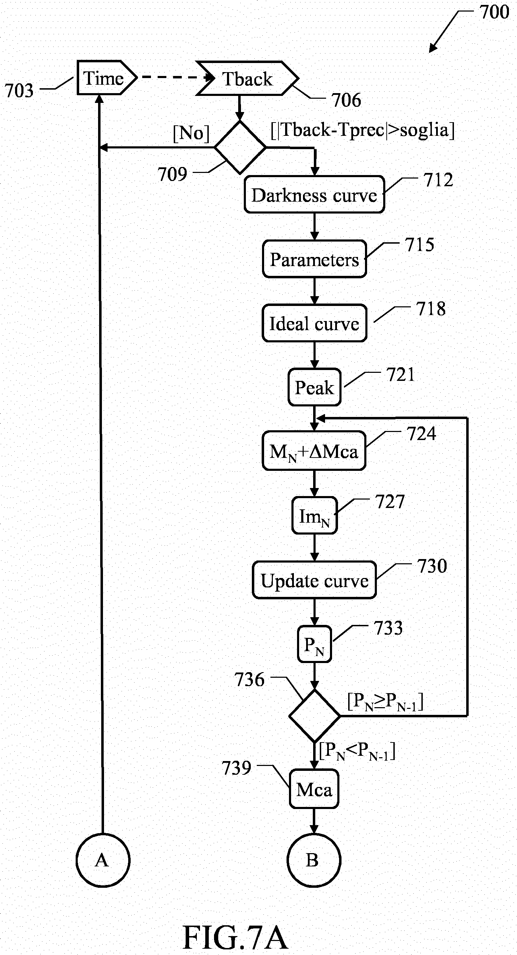

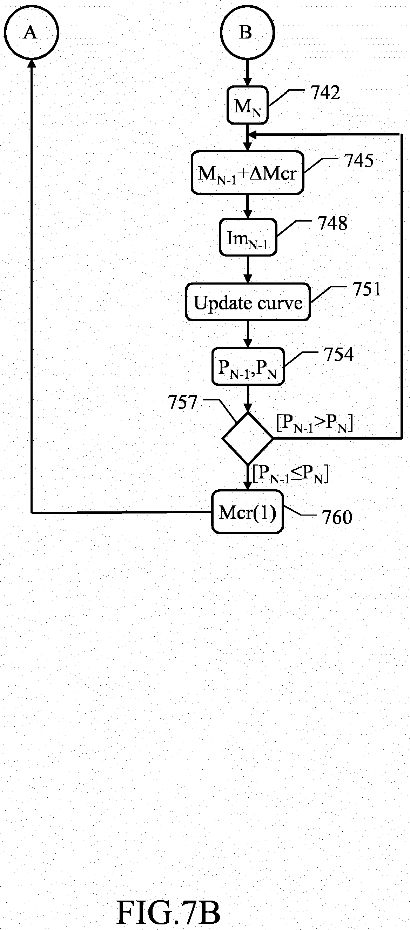

With reference now to FIG.6A-FIG.6C, FIG.7A-FIG.7B, activity diagrams are shown describing the flow of activities relating to an implementation of the solution according to an embodiment of the present disclosure.

In this respect, each block may correspond to one or more executable instructions for implementing the specified logical function in the controller.

Particularly, the diagram of FIG.6A-FIG.6C shows an exemplary process that describes the operation of the controller during daytime hours (*i.e.*, in the presence of sunlight) with a method 600.

The total triggering condition is verified starting from the block 602. The process passes from block 602 to block 604 whenever a verification period of the electrical parameters has lapsed (for example, set as configuration parameter of the inverter, of the order of 10ms-0s); in response thereto, the electrical meter determines a current version of one or more (verification) electrical parameters, for example, the working current *Iw*, the working voltage *Vw* and the working power *Pw*. The tracker at block 606 retrieves a comparison version of the verification electrical parameters, stored in a corresponding variable at a previous locking of the maximum power point, as described below (referred to as comparison current *Ic,* comparison voltage *Vc* and comparison power *Pc*); for each verification electrical parameter, the tracker calculates a corresponding relative variation (electrical variation):

$$\frac{|Iw-Ic|}{Ic}, \frac{|Vw-Vc|}{Vc}, \frac{|Pw-Pc|}{Pc}.$$

The tracker at block 608 compares each electrical variation with a corresponding threshold value (for example, set as configuration parameter of the inverter, of the order of 5-10%).

If none of the electrical variations is (possibly strictly) higher than the corresponding threshold value, the tracker at block 610 verifies whether a verification period of the environmental parameters has lapsed; the verification period of the environmental parameters is higher than the verification period of the electrical parameters (for example, set as configuration parameter of the inverter, equal to 10-20 times the verification period of the electrical parameters). If the verification period of the environmental parameters has not lapsed yet, the process returns to the block 602 waiting for a further verification period of the electrical parameters. Conversely (when the verification period of the environmental parameters as well has lapsed), the process continues to block 612 wherein the environmental meter measures a current version of one or more (verification) environmental parameters, for example, the value of the direct irradiance (current direct irradiance $DNIw$) and the value of the global irradiance (current global irradiance $GNIw$). The tracker at block 614 retrieves a comparison version of the environmental parameters, stored in a corresponding variable at a previous locking of the maximum power point as well, as described below (referred to as comparison direct irradiance $DNIc$ and comparison global irradiance $GNIc$); for each verification environmental parameter, the tracker calculates a corresponding relative variation (environmental variation):

$$\frac{|DNIw-DNIc|}{DNIc}, \frac{|GNIw-GNIc|}{GNIc}.$$

The tracker at block 616 compares each environmental variation with a corresponding threshold value (for example, set as configuration parameter of the inverter, of the order of 5-10%). If none of the environmental variations is (possibly strictly) higher than the corresponding threshold value, the process returns to the block 602 waiting for a further verification period of the electrical parameters.

Referring again to block 608, if at least one of the electrical variations is (possibly strictly) higher than the corresponding threshold value, the total triggering condition is considered fulfilled. In this way, it is possible to detect relatively fast changes of the $P$-$V$ curve (at the left of the working point $Iw/Vw$). In response thereto, the tracker starts the total searching procedure of the target range $CR_{target}$. Likewise, if at the block 616 at least one of the environmental variations is (possibly strictly) higher than the corresponding threshold value, the total triggering condition is considered fulfilled. In this way, it is possible to detect relatively slow changes of the $P$-$V$ curve (at the left of the working point $Iw/Vw$), which might be not detected by the electrical variations. In response thereto, in this case as well the tracker starts the total searching procedure of the target range $CR_{target}$. The total searching procedure of the target range $CR_{target}$ is also started directly from a block 622 whenever the daytime operation of the photovoltaic generator is activated (for example, at the beginning of every day).

The corresponding flow of activity begins at block 624, wherein the electrical meter measures the short-circuit current $Isc$ and the open-circuit voltage $Voc$. Continuing to block 626, the temperature estimator calculates the junction temperature $Tj$, for example, by applying the following formula:

$$T_j = \frac{Voc - Vocr + \beta r \cdot Tjr}{N \cdot \dfrac{K}{q} n_{eq} \cdot \ln\left(\dfrac{Isc}{Iscr}\right) + \beta r},$$

based on the open-circuit voltage $Voc$ (just measured) and on the reference voltage $Vocr$, temperature coefficient $\beta r$, reference temperature $Tjr$, number of receivers $N$, equivalent ideality factor $n_{eq}$ and reference current $Iscr$ (extracted from the model repository), in addition to the Boltzmann constant $K$ and the absolute value of the electron charge $q$. The temperature estimator then saves the junction temperature $Tj$ into the temperatures repository (by adding a corresponding record). This makes it possible to estimate the junction temperature $Tj$ even when the photovoltaic generator is not equipped with sensors for its measurement (especially in case of photovoltaic generators of the concentration type wherein this measurement is not possible). In the solution according to an embodiment of the present disclosure, however, the junction temperature $Tj$ is estimated online (by exploiting already available information for the tracking of the maximum power point), without interrupting the operation of the photovoltaic generator, and then the supply of energy. The junction temperature $Tj$ may then be displayed on a display of the inverter (for example, its touch-screen), thereby allowing monitoring it in real-time; at the same time, the junction temperatures $Tj$ logged in the temperature repository allow analyzing their trend over time for diagnostic purposes. This allows verifying the correct operation of the photovoltaic generator (for example, of heat sinks thereof), so as to intervene promptly with extraordinary maintenance operations as soon as necessary.

With reference now to block 628, the tracker controls the photovoltaic generator to provide a working current $Iw$ corresponding to the absolute critical mismatch $Mca$ (absolute critical current $Ica$), i.e.:

$$Ica \cdot Isc = (1 - MCA).$$

The electrical meter then measures the working voltage Vw and calculates the working power *Pw* at block 630. Continuing to block 632, the tracker determines the working canonical range $CR_w$ to which the working point *Iw/Vw* belongs, which then identifies the starting range $CR_{start}$, via the mathematical model of the photovoltaic generator. For example, the *I-V* curve may be defined by the following characteristic equation:

$$V(I) = \sum_{i=1}^{N} \left( \underbrace{\sum_{z=1}^{i} \frac{KT_j}{q} n_{eq} \ln\left(1 + \frac{I_k - I}{Io_{eq}}\right)}_{} - Rs \cdot I - \underbrace{\sum_{z=i+1}^{N} \frac{KT_{by}}{q} n_{by} \ln\left(1 + \frac{I - I_k}{Io_{by}}\right)}_{} \right) \cdot w_i(I),$$

where $I_k$ is the value of the current supplied by the *k-th* receiver, $I_{0eq}$ is the equivalent reverse saturation current of the cells (junction reverse saturation current), $T_{by}$ is the temperature of the bypass diodes and

$$w_i = \begin{cases} 1 \ if \ I_k < I < I_{k+1} \\ 0 \ otherwise \end{cases}$$ (in addition to the Boltzmann constant $K$, junction temperature $Tj$, absolute value of the electron charge $q$, junction equivalent ideality factor $n_{eq}$, series resistance $Rs$, bypass ideality factor $n_{by}$ and bypass reverse saturation current $I_{0by}$). From this equation there is obtained, for each working point *Iw/Iw* wherein *k* receivers are active:

$$Vw \approx \frac{KT_j}{q} n_{eq} \cdot \ln\left(\frac{I_1 - Iw}{Io_{eq}}\right) + \frac{KT_j}{q} n_{eq} \cdot \ln\left(\frac{I_2 - Iw}{Io_{eq}}\right) + .. + \frac{KT_j}{q} n_{eq} \cdot \ln\left(\frac{I_k - Iw}{Io_{eq}}\right) +$$

$$-(N \cdot Rs) \cdot Iw - \frac{KT_{by}}{q} n_{by} \ln\left(\frac{Iw - I_{k+1}}{Io_{by}}\right) - \frac{KT_{by}}{q} n_{by} \ln\left(\frac{Iw - I_{k+2}}{Io_{by}}\right) + ... - \frac{KT_{by}}{q} n_{by} \ln\left(\frac{Iw - I_N}{Io_{by}}\right).$$

Assuming (with negligible effects on the accuracy) the logarithmic quantities all the same, and particularly in those (positive) of all the active receivers $I_k = Isc$ and in those (negative) of all the inactive receivers $I_k = 0$, we have:

$$Vw = k \cdot \frac{KT_j}{q} n_{eq} \ln\left(\frac{Isc - Iw}{Io_{eq}}\right) - Rs \cdot Iw - (N - k) \cdot \frac{KT_{by}}{q} n_{by} \ln\left(\frac{Iw}{Io_{by}}\right),$$

from which:

$$k = \frac{Vw + Rs \cdot Iw + N \dfrac{KT_{by}}{q} n_{by} \ln\left(\dfrac{Iw}{Io_{by}}\right)}{\dfrac{KT_j}{q} n_{eq} \ln\left(\dfrac{Isc - Iw}{Io_{eq}}\right) + \dfrac{KT_{by}}{q} n_{by} \ln\left(\dfrac{Iw}{Io_{by}}\right)}.$$

Despite the junction reverse saturation current $I_{0eq}$ is strongly dependent on the temperature (and difficult to estimate), the quantity $\dfrac{KT_j}{q} n_{eq} \ln\left(\dfrac{Isc - Iw}{Io_{eq}}\right)$ is substantially equal to $Voc/N + \dfrac{KT_j}{q} n_{eq} \ln\left(\dfrac{Isc - Iw}{Isc}\right),$ so that:

$$k = \cfrac{Vw + Rs \cdot Iw + N\cfrac{KT_{by}}{q}n_{by}\ln\left(\cfrac{Iw}{Io_{by}}\right)}{\cfrac{Voc}{N} + \cfrac{KT_j}{q}n_{eq}\ln\left(\cfrac{Isc - Iw}{Isc}\right) + \cfrac{KT_{by}}{q}n_{by}\ln\left(\cfrac{Iw}{Io_{by}}\right)}.$$

The temperature of the bypass diodes $T_{by}$, even if it is not known, may be considered a constant value equal to the average value of the rear temperature $Tback$ (average rear temperature $Tmean$), since it slightly affects the result of the formula. Therefore, the order of the working canonical range $CR_w$ is determined by the (integer) number of receivers that are active:

$$CRw = INT\left(\cfrac{Vw + Rs \cdot Iw + N\cfrac{KTmean}{q}n_{by}\ln\left(\cfrac{Iw}{Io_{by}}\right)}{\cfrac{Voc}{N} + \cfrac{KT_j}{q}n_{eq}\ln\left(\cfrac{Isc - Iw}{Isc}\right) + \cfrac{KTmean}{q}n_{by}\ln\left(\cfrac{Iw}{Io_{by}}\right)}\right),$$

thus depending on the series resistance $Rs$, number of receivers $N$, average rear temperature $Tmean$, bypass ideality factor $n_{by}$, junction equivalent ideality factor $n_{eq}$, bypass reverse saturation current $I_{0by}$ (extracted from the model repository) and on the working voltage $Vw$, working current $Iw$, open-circuit voltage $Voc$, short-circuit current $Isc$, junction temperature $Tj$ (just determined), in addition to Boltzmann constant $K$ and absolute value of the electron charge $q$.

Alternatively, it is possible to represent the operation of the photovoltaic generator via the mathematical model of a dummy (photovoltaic) generator, having a number of (dummy) receivers $N'$ lower than the number of receivers $N$ of the photovoltaic generator, which has the same $I$-$V$ curve (and then the same $P$-$V$ curve as well). In this case, the order of the (dummy) working canonical rage $CR_w$ is given by:

$$CRw = INT\left(\cfrac{Vw + Rs \cdot Iw + N\cfrac{KTmean}{q}n_{by}\ln\left(\cfrac{Iw}{Io_{by}}\right)}{\cfrac{Voc}{N} + \cfrac{KT_j}{q}n_{eq}\ln\left(\cfrac{Isc - Iw}{Isc}\right) + \cfrac{KTmean}{q}n_{by}\ln\left(\cfrac{Iw}{Io_{by}}\right)} \cdot \cfrac{N'}{N}\right).$$

The use of the dummy photovoltaic generator makes the search of the target range $CR_{target}$ faster (since the number of canonical ranges $CR_k$ is smaller) but the search of the maximum power point slower (since the width of the canonical ranges $CR_k$ is higher); therefore, this becomes advantageous as the number of receivers that are generally with mismatch increases (since the number of canonical ranges $CR_k$ increases accordingly). Experimental results have shown that it is convenient to use the dummy photovoltaic generator when the number of receivers N is higher than a threshold value of the order of 8-16, preferably 10-14 and still more preferably 11-13, such as 12, by setting the dummy number of receivers $N'$ equal to this threshold value.

At this point, the tracker starts the partial searching procedure of the target range $CR_{target}$ (beginning from the starting range $CR_{start}$). This happens even when it would not be necessary (*i.e.,* when the starting range $CR_{start}$ is equal to the last range $CR_N$ and thus it already identifies the target range $CR_{target}$); in this way, as described below, there is ensured that the maximum power point is always determined roughly within the target range $CR_{target}$. The partial searching procedure of the target range $CR_{target}$ is also started directly from a block 634 whenever a partial triggering period has lapsed (for example, set as configuration parameter of the inverter, of the order of 10-20s) that defines the fulfillment of the partial triggering condition. In this case, the starting range $CR_{start}$ is set equal to the current target range $CR_{target}$; moreover, the short-circuit current $Isc$ and the open-circuit voltage $Voc$ are maintained equal to those measured in the previous total searching procedure of the target range $CR_{target}$ (always performed at least once after the activation of the photovoltaic generator), since they may be considered to have the same value being the (verification) environmental parameters substantially unchanged.

The partial searching procedure of the target range $CR_{target}$ involves the execution of a corresponding loop until it is determined. The searching loop of the target range $CR_{target}$ starts with the determination of the mismatch $M_{start}$ of the starting range $CR_{start}$. In turn, the determination of the mismatch $M_{start}$ first of all involves a searching loop of the plateau of the starting range $CR_{start}$ (at its left end). The searching loop of the plateau begins at block 636, wherein the tracker controls the photovoltaic generator to provide a new working current $Iw$ being increased (at most up to the short-circuit current $Isc$) by a (plateau searching) pitch $\Delta Im$, i.e., $Iw=Iw+\Delta Im$, in order to move the working point $Iw/Vw$ to the left. The pitch $\Delta Im$ may be relatively large (for example, 0.5-2%), provided that it is not too large to risk skipping the plateau; consequently, the search of the plateau is relatively fast (typically requiring a few iterations), thereby limiting the reduction of the energy yield of the photovoltaic system. The electrical meter at block 638 measures the working voltage $Vw$ and it calculates the working power $Pw$. A test is performed at block 640, wherein the tracker compares the working power $Pw$ with the power ($Psearch$) of a searching point indicated in a corresponding variable, by its current ($Isearch$) and its voltage ($Vsearch$), initialized to the working point $Iw/Iw$ upon entry into the searching loop of the plateau. If the working power $Pw$ is (strictly) higher than the power of the searching point $Psearch$, the tracker at block 642 saves an indication of the working point $Iw/Vw$ as a new searching point into the corresponding variable ($Isearch=Iw$, $Vsearch=Vw$). The process then continues to block 644; the same point is also reached directly from the block 640 if the working power $Pw$ is lower than or equal to the power of the searching point $Psearch$. In this way, during the searching loop of the plateau the power peak $Pm_{start}$ of the starting range $CR_{start}$ is estimated roughly (with a resolution defined by the pitch $\Delta Im$).

At this point, the tracker determines the working canonical range $CR_w$ to which the working point $Iw/Vw$ belongs via the mathematical model of the photovoltaic generator as above. The tracker at block 646 then verifies an output condition of the searching loop of the plateau. Particularly, if the working current $Iw$ is (strictly) lower than the short-circuit current $Isc$ and if the working canonical range $CR_w$ has remained equal to the starting range $CR_{start}$ ($w=start$), i.e., it is still possible to move the working point $Iw/Vw$ to the left, the process returns to the block 636 to reiterate the searching loop of the plateau. Conversely, when the working current $Iw$ is equal to the short-circuit current $Isc$ (i.e., it has been reached the beginning of the $I$-$V$ curve) or the working canonical range $CR_w$ is different from the starting range $CR_{start}$ ($w<start$), the searching loop of the plateau ends by descending into block 648. In this condition, a last working point $Iw/Vw$ of the starting range $CR_{start}$ during the searching loop of the plateau, i.e., the current working point (if $Iw=Isc$) or the previous one (otherwise), is located in its plateau (if the pitch $\Delta Im$ is not too large); therefore, the corresponding current, i.e., $Iw$ (if $Iw=Isc$) or $Iw-\Delta Im$ (otherwise), defines the deliverable current $Im_{start}$ by the receivers of the starting range $CR_{start}$. The tracker may then calculate the corresponding mismatch:

$$M_{start}=(Isc-Im_{start})/Isc.$$

The (total or partial) searching procedure of the target range $CRtarget$ continues with the verification of the following ranges $CR_{succ}$ of the starting range $CR_{start}$. The corresponding flow of activity begins at block 650, wherein the tracker compares the starting range $CRstart$ with the last range $CRN$. If the starting range $CRstart$ is different from the last range $CR_N$ ($start<N$), a verification cycle is performed to verify the following ranges $CR_{succ+d}$ in succession (starting from the first one for $d=1$), each according to the comparison of the relative difference of the mismatches $M_{start+d}$ and $M_{start}$ with the corresponding relative critical mismatch $Mcr(d)$; in an embodiment of the present disclosure, this comparison is performed indirectly through the following operations, without the need of determining the mismatch $M_{start+d}$. Particularly, the verification cycle starts at block 652, wherein the modeler determines the relative critical mismatch $Mcr(d)$. For this purpose, the relative critical mismatch $Mcr(d)$ is extracted from the critical mismatch repository when it is of the first order ($d=1$); in the other cases ($d>1$), the relative critical mismatch $Mcr(d)$ is instead calculated approximately by the following empirical formula (based on the number of receivers $N$):

$$Mcr(d)=Mcr(1)+(d-1)/N.$$

This allows determining the relative critical mismatch $Mcr(d)$ of any order very quickly; nevertheless, simulations have shown that the corresponding approximation does not compromise the correct identification of the target range $CR_{target}$. The simulator at block 654 calculates a test value of the mismatch (test mismatch $Mtest$) equal to the mismatch $M_{start}$ increased according to the relative critical mismatch $Mcr(d)$; for example, if in general the relative critical mismatch $Mcr(d)$ is defined according to the following relative difference of the mismatches $M_k$ and $M_{k+d}$:

$$Mcr(d)=(M_{k+d}-M_k)/(1-M_k),$$

the test mismatch *Mtest* is:

$$Mtest = M_{start} + Mcr(d) \cdot (1 - M_k).$$

With reference now to block 656, the tracker controls the photovoltaic generator to provide a working current *Iw* corresponding to the test mismatch *Mtest* (test current *Itest*), i.e.:

$$Itest = Isc \cdot (1 - Mtest).$$

The electrical meter then measures the (test) working voltage *Vw* at block 658. Continuing to block 660, the tracker determines the working range $CR_w$ to which the (test) working point *Iw/Vw* belongs via the mathematical model of the photovoltaic generator as above. A test is performed at block 662, wherein the tracker compares the working range $CR_w$ with the following range $CR_{start+d}$.

If the order of the working range $CR_w$ is lower than the one of the following range $CR_{start+d}$ (*w<start+d*), this means that the mismatch of the following range $CR_{start+d}$ is higher than or equal to the test mismatch *Mtest,* and then the relative difference of the mismatches $M_{start+d}$ and $M_{start}$ is higher than or equal to the relative critical mismatch *Mcr(d),* so that the power peak $Pm_{start+d}$ is lower than or equal to the power peak $Pm_{start}$. In this case, the flow of activity branches at block 664 according to the following range $CR_{start+d}$. If the following range $CR_{start+d}$ is different from the last range $CR_N$ (*start+d<N*), the tracker at block 666 passes to a next following range $CR_{start+d}$ (*d=d+1*). The flow of activity then returns to block 652 to repeat the same operations.

With reference again to block 662, if instead the working range $CR_w$ is higher than or equal to the following range $CR_{start+d}$, this means that the mismatch of the following range $CR_{start+d}$ is lower than the test mismatch *Mtest,* and then the relative difference of the mismatches $M_{start+d}$ and $M_{start}$ is lower than the relative critical mismatch *Mcr(d),* so that the power peak $Pm_{start+d}$ is higher than the power peak $Pm_{start}$. In this case, the tracker at block 668 sets the following range $CR_{start+d}$ as new starting range $CR_{start}$ (*start=start+d*). The flow of activity then returns to the block 636 to restart the searching loop of the target range $CR_{target}$. This happens even when it would not be necessary (*i.e.,* when the following range $CR_{start+d}$ is equal to the last range $CR_N$ and then it already identifies the target range $CR_{target}$); in this way, as above there is ensured that the maximum power point is always determined roughly within the target range $CR_{target}$.

With reference again to block 664, if the following range $CR_{start+d}$ is equal to the last range $CR_N$ (*start+d=N*), the tracker at block 670 identifies the target range $CR_{target}$ with the starting range $CR_{start}$. The same point is also reached from the block 650 if the starting range $CR_{start}$ is equal to the last range $CR_N$ (*start=N*), so that in this case as well the tracker identifies the target range $CR_{target}$ with the starting range $CR_{start}$ (equal to the last range $CR_N$). In both cases, the maximum power point is now tracked in the target range $CR_{target}$.

The corresponding flow of activities begins at block 674 (from the block 650 or from the block 666), wherein the tracker controls the photovoltaic generator to provide the current of the searching point *Isearch* (indicated in the corresponding variable), which searching point has been determined during the searching loop of the plateau of the starting range $CR_{start}$ (now target range $CR_{target}$), always performed as indicated above; in this way, the tracking of the maximum power point starts from the searching point which already corresponds to it roughly, whereby the working point *Iw/Vw* may converge towards the maximum power point very quickly. At this point, a tracking loop (of the power peak $Pm_{target}$ in the target range $CR_{target}$, i.e., the maximum power point of the entire *P-V* curve) is performed continuously, until one of the conditions described above occurs, *i.e.,* the verification period of the electrical parameters or the partial triggering period has lapsed (or the photovoltaic generator is disabled, for example, at night); the tracking loop begins at block 676, wherein the tracker controls the photovoltaic generator to provide a new working current Iw being increased by a (maximum power point tracking) pitch *Δlp,* i.e., *Iw=Iw+Δlp,* so as to move the working point *Iw/Vw* in a (maximum power point tracking) direction to the left if *Δlp>0* or to the right if *Δlp<0* (with *Δlp* of any sign of the beginning). The pitch *Δlp* may be very small (for example, 0.05-0.2%) in order to increase the accuracy of the tracking of the maximum power point (and therefore the energy efficiency of the photovoltaic system) without substantially compromising the convergence speed to it (since the working point *Iw/Vw* is already very close to the maximum power point). The electrical meter at block 678 measures the working voltage Vw and it calculates the working power Pw. A test is performed at block 680, wherein the tracker compares the working power Pw with a previous version thereof (previous power *Pprec*), saved in a corresponding variable (initialized to the power *Psearch* of the searching point). If the working power Pw is higher than or equal to the previous power *Pprec,* the process returns to the block 676 to continue with the same tracking direction. On the contrary, if the working power Pw is (strictly) lower than the previous power *Pprec,* the tracker at block 682 changes the sign of the pitch *Δlp* (*Δlp=-Δlp*) so as to reverse the tracking direction. A test is then performed at block 684, wherein the tracker verifies whether the maximum power point has been locked; for example, this occurs when the tracking direction changes repeatedly for a predetermined number of successive iterations of the tracking loop (for example, 2-6), indicating that the working point *Iw/Vw* is swinging around the maximum power point. If the maximum power point has not been locked or it had already been locked previously during the tracking loop, the process returns to the block 676 to repeat the same operations.

Conversely, as soon as the maximum power point has been locked (for the first time during the tracking loop) the tracker at block 685 saves the current version of the electrical parameters as their new comparison version (*Ic=Iw, Vc=Vw* and *Pc=Pw*); at the same time, the environmental meter again measures the current direct irradiance *DNIw* and the current global irradiance *GNIw,* and saves them as new version of the environmental parameters (*DNIc=DNIw* and *GNIc=GNIw*). At this point, the environmental meter at block 686 measures the air temperature *Tair* and the wind speed v. Continuing to block 688, the performance estimator calculates the performance indicators under standard conditions. For example, the performance estimator calculates the maximum power *Pmax* and the efficiency *EFF=Pmax/(DNI·A)* in the STC and SOC conditions, using formulas known per se based on the working power Pw, corresponding to that of the maximum power point (calculated above), on the air temperature *Tair* and wind speed *v* (measured above) and on the number of receivers *N*, cell area *A*, equivalent ideality factor $n_{eq}$, temperature coefficient *βr* and reference junction temperature *Tjr* (extracted from the model repository). The performance estimator then saves the performance indicators into the performance repository (by adding a corresponding record). The performance indicators so obtained are independent of the environmental conditions, so that they allow determining when a deterioration of the performance of the photovoltaic generator is actually caused by its degradation. In the solution according to an embodiment of the present disclosure, however, the standard performance indicators as well are calculated online (by exploiting already available information), without interrupting the operation of the photovoltaic generator, and then the supply of energy. The performance indicators may then be displayed on the display of the inverter, so as to allow monitoring them in real-time; at the same time, the performance indicators logged in the performance repository allow analyzing their trend over time for diagnostic purposes. This allows verifying the correct operation of the photovoltaic generator, in order to intervene promptly with extraordinary maintenance operations as soon as necessary. The process then returns to the block 676 to repeat the same operations.

The diagram of FIG7A-FIG.7B instead represents an exemplary process describing the operation of the controller during the nighttime hours *(i.e.,* in the absence of sunlight) with a method 700.

The process passes from block 703 to block 706 whenever a predetermined modeling interval is reached (during the night, for example, between 23:00 and 4:00). In response thereto, the environmental meter measures the rear temperature *Tback* (which may be considered substantially equal to an internal temperature of the photovoltaic generator under these conditions). A test is performed at block 709, wherein the modeler compares the rear temperature *Tback* with the previous one corresponding to a last measurement saved into the model repository (previous temperature *Tprec*). If the difference in absolute value between the rear temperature *Tback* and the previous temperature *Tprec* is (possibly strictly) lower than a corresponding threshold value (for example, set as configuration parameter of the inverter, of the order of 1-3 °C), the process returns to the block 703 to repeat the same operations continuously until the time remains within the modeling interval.

Conversely, if the difference in absolute value between the rear temperature *Tback* and the previous temperature *Tprec* is (possibly strictly) higher than the threshold value, the modeler at block 712 measures the *I-V* curve in these conditions of absence of light (darkness *I-V* curve); this occurs via a procedure known per se, for example, applying a train of pulses of current I by the inverter to the photovoltaic generator (which in this case would operate as a load) in a range from zero to the reference current *Iscr* corresponding to the previous temperature *Tprec* saved in the model repository (with a dynamic such as to avoid warming the photovoltaic cells but at the same time to avoid operating in transient state) and measuring the corresponding voltage *V.* The modeler then saves an indication of the darkness *I-V* curve (in association with the rear temperature *Tback*) into a new record in the model repository. Continuing to block 715, the modeler calculates the modeling parameters corresponding to the darkness *I-V* curve and saves them into the model repository (in association therewith). For example, by using formulas known per se the modeler calculates the series resistance Rs, the equivalent ideality factor $n_{eq}$, the reference temperature *Tjr,* the reference voltage *Vocr* and the reference current *Iscr* (according to this darkness *I-V* curve) and the temperature coefficient *βr* (according to a predetermined number of latest darkness *I-V* curves, for example, 30-70). In this way, the modeling parameters are updated dynamically according to the actual characteristics of the photovoltaic generator; moreover, their versions logged into the model repository (relating to different darkness *I-V* curves measured over time) allow analyzing the trend over time for diagnostic purposes (in order to verify the correct operation of the photovoltaic generator, for example, its electrical contacts).

Continuing to block 718, the modeler calculates (from the darkness *I-V* curve with formulas known per se) the *I-V* curve under ideal conditions, *i.e.,* without any mismatch (ideal *I-V* curve). The modeler then passes to calculate the absolute critical mismatch *Mca.* For this purpose, the modeler at block 721 determines the unique power peak of the ideal *I-V* curve. The modeler then performs a searching loop of the absolute critical mismatch *Mca.* The searching loop of the absolute critical mismatch *Mca* begins at block 724, wherein the modeler increases the mismatch $M_N$ (starting from zero) by an (absolute critical mismatch searching) pitch $\Delta Mca$, for example, 0.1-2%. The modeler at block 727 calculates the deliverable current $Im_N$ corresponding to the (increased) mismatch $M_N$:

$$Im_N = Isc \cdot (1 - M_N).$$

Continuing to block 730, the modeler updates the ideal *I-V* curve according to the (decreased) deliverable current $Im_N$. The modeler at block 733 then calculates the power peak of the (updated) ideal *I-V* curve. A test is performed at block 736, wherein the modeler compares the power peak $Pm_N$ with the power peak $Pm_{N-1}$ (always equal to the unique power peak of the ideal *I-V* curve). If the power peak $Pm_N$ is higher than or equal to the power peak $Pm_{N-1}$, the process returns to the block 724 to reiterate the searching loop of the absolute critical mismatch *Mca*. Conversely, as soon as the power peak $Pm_N$ is lower than the power peak $Pm_{N-1}$, the searching loop of the absolute critical mismatch *Mca* ends by descending into block 739; at this point, the absolute critical mismatch *Mca* is set equal to the mismatch $M_N$ (at the exit from the searching loop of the absolute critical mismatch *Mca*).

The modeler then passes to calculate the relative critical mismatch *Mcr(1)* of first order (based on the most simple case wherein only the last two canonical ranges $CR_{N-1}$ and $CR_N$ are with mismatch). For this purpose, the modeler at block 742 returns to the ideal *I-V* curve (without any mismatch); the modeler then sets the mismatch $M_N$ to an arbitrary value other than zero, but higher than the absolute critical mismatch *Mca* (for example, 40-60%), and calculates the deliverable current $Im_N$ corresponding thereto:

$$Im_N = Isc \cdot (1 - M_N).$$

The modeler then performs a searching loop of the relative critical mismatch *Mcr(1)*. The searching loop of the relative critical mismatch *Mcr(1)* begins at block 745, wherein the modeler increases the mismatch $M_{N-1}$ (starting from zero) by a (relative critical mismatch searching) pitch $\Delta Mcr$, for example, 0.1-2%. The modeler at block 748 calculates the deliverable current $Im_{N-1}$ corresponding to the (increased) mismatch $M_{N-1}$:

$$Im_{N-1} = Isc \cdot (1 - M_{N-1}).$$

Continuing to block 751, the modeler updates the ideal *I-V* curve according to the (decreased) deliverable current $Im_{N-1}$. The modeler at block 754 then calculates the power peak $Pm_{N-1}$ and the power peak $Pm_N$ of the (updated) ideal *I-V* curve, both varied as a consequence of the increase of the mismatch $M_{N-1}$. A test is performed at block 757, wherein the modeler compares the power peak $Pm_{N-1}$ with the power peak $Pm_N$. If the power peak $Pm_{N-1}$ is higher than the power peak $Pm_N$, the process returns to the block 745 to reiterate the searching loop of the relative critical mismatch *Mcr(1)*. Conversely, as soon as the power peak $Pm_{N-1}$ is lower than or equal to the power peak $Pm_N$, the searching loop of the relative critical mismatch *Mcr(1)* ends by descending into block 760; at this point, the relative critical mismatch *Mcr(1)* is calculated according to the mismatch $M_N$ and the mismatch $M_{N-1}$ (at the exit from the searching loop of the relative critical mismatch *Mcr(1)*):

$$Mcr(1) = (M_N - M_{N-1})/(1 - M_{N-1}),$$

The process then returns to the block 703 to repeat the same operations continuously until the time remains in the modelling interval.

Naturally, in order to satisfy local and specific requirements, a person skilled in the art may apply many logical and/or physical modifications and alterations to the present disclosure. More specifically, although this disclosure has been described with a certain degree of particularity with reference to one or more embodiments thereof, it should be understood that various omissions, substitutions and changes in the form and details as well as other embodiments are possible. Particularly, different embodiments of the present disclosure may even be practiced without the specific details (such as the numerical values) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the present disclosure may be incorporated in any other embodiment as a matter of general design choice. In any case, each numerical value should be read as modified by the term about (unless already done) and each range of numerical values should be intended as expressly specifying any possible number along the *continuum* within the range (comprising its end points). Moreover, ordinal or other qualifiers are merely used as labels to distinguish elements with the same name but do not by themselves connote any priority, precedence or order. The terms include, comprise, have, contain and involve (and any forms thereof) should be intended with an open, non-exhaustive meaning (*i.e.*, not limited to the recited items), the terms based on, dependent on, according to, function of (and any forms thereof) should be intended as a non-exclusive relationship (*i.e.,* with possible further variables involved), the term a/an should be intended as one or more items (unless expressly indicated otherwise), and the term means for (or any means-plus-function formulation) should be intended as any structure adapted or configured for carrying out the relevant function.

For example, one embodiment provides a method for controlling a photovoltaic generator comprising a plurality of modules adapted to contribute to a power supplied by the photovoltaic generator. However, the photovoltaic generator may be of any type (for example, for domestic, industrial use) and it may comprise modules of any type (for example, with flat, high concentration photovoltaic cells), in any number and coupled in any way; more generally, the method may be applied at any level (for example, generally for the entire photovoltaic generator or individually for each receiver thereof).

In an embodiment, an operation of the photovoltaic generator is defined by an operation characteristic of a model photovoltaic generator having a plurality of model modules. However, the model photovoltaic generator may be of any type (for example, always the actual photovoltaic generator, always the dummy photovoltaic generator or one of them selectively).

In an embodiment, the operation characteristic is divided into a plurality of ranges for different mismatches of the model modules, with the ranges that are ordered according thereto (wherein in each range the model modules having the mismatch lower than or equal to the mismatch of the range are active and the other model modules are inactive). However, the mismatches may be defined in any way (for example, in absolute or relative terms) and the ranges may be in any number and ordered in any way.

In an embodiment, the method comprises determining a starting range; the starting range is equal to a first one of the ranges or it is equal to the range having the mismatch corresponding to an absolute critical mismatch of the photovoltaic generator. However, the starting range may be determined in any way (for example, always equal to the first range, even if this would involve a significant degradation of the performance, always equal to the range corresponding to the absolute critical mismatch or selectively in both ways) .

In an embodiment, the absolute critical mismatch is the mismatch of a last one of the ranges with a single preceding range making a power peak of the range equal to the power peak of the preceding range. However, the absolute critical mismatch may be provided in any way (even being predetermined).

In an embodiment, the method comprises searching a target range between the starting range and each range following the starting range. However, the target range may be searched in any way (for example, with a binary search algorithm).

In an embodiment, the target range is searched according to a comparison between a mismatch relative difference (between the mismatch of the following range and the mismatch of the starting range) and a relative critical mismatch of the photovoltaic generator of order equal to a distance between the following range and the starting range. However, the mismatch relative difference may be defined in any way (for example, with respect to one of the two mismatches or to a combination thereof) and it may be compared with the corresponding relative critical mismatch in any way (according to its definition).

In an embodiment, the relative critical mismatch is a relative increase of the mismatch of each range making the power peak of the range equal to the power peak of a range following this range at the distance therefrom equal to the order of the relative critical mismatch. However, the relative critical mismatch may be provided in any way (even being predetermined).

In an embodiment, the method comprises tracking the power peak of the target range by controlling the photovoltaic generator to operate in a working point corresponding thereto. However, the power peak may be tracked in any way (for example, by an incremental conductance, current sweep, constant voltage method).

In an embodiment, the model photovoltaic generator is the photovoltaic generator and the model modules are the modules of the photovoltaic generator. However, this choice may be used in any condition (for example, always or only when the number of modules is below any threshold value).

In an embodiment, the model photovoltaic generator is a dummy photovoltaic generator and the model modules are dummy modules of the dummy photovoltaic generator. However, this choice may be used in any condition (for example, always or only when the number of modules exceeds any threshold value).

In an embodiment, a number of the dummy modules is lower than a number of the modules of the photovoltaic generator. However, the number of dummy modules may be chosen in any way (for example, a fixed value or a percentage of the number of modules of the photovoltaic generator).

In an embodiment, said step of determining a starting range comprises controlling the photovoltaic generator to work at the working point corresponding to the absolute critical mismatch. However, the working point corresponding to the absolute critical mismatch may be determined in any way (according to its definition) and the photovoltaic generator may be controlled in any way (for example, current-controlled or voltage-controlled).

In an embodiment, said step of determining a starting range comprises determining the range of the working point corresponding to the absolute critical mismatch according to a mathematical model of the photovoltaic generator. However, the range of the working point may be determined according to any mathematical model (for example, in more or less simplified form with the modeling parameters actually measured, predetermined to average values or in any combination thereof).

In an embodiment, said step of searching a target range comprises performing a searching loop of the target range. However, this operation may be avoided when the starting range is equal to the last range.

In an embodiment, the searching loop of the target range comprises determining the mismatch of the starting range. However, the mismatch of the starting range may be determined in any way (even with a search thereof).

In an embodiment, the searching loop of the target range comprises an iteration that is implemented by repeating the following operations in succession for each range following the starting range. However, the searching loop of the target range may be implemented in any way (for example, in a binary way).

In an embodiment, the iteration comprises verifying the following range according to a comparison of the corresponding mismatch relative difference with the corresponding relative critical mismatch. However, the verification may be performed in any way (even by determining the mismatch of the following range).

In an embodiment, the iteration comprises restarting the searching loop of the target range with the starting range set equal to the following range in response to the corresponding mismatch relative difference being lower than the corresponding relative critical mismatch. However, this operation may be performed in response to any comparison between the mismatch relative difference and the corresponding relative critical mismatch (according to their definition).

In an embodiment, the iteration is repeated until the following range reaches the last range. However, the iteration may be terminated (without restarting the searching loop) even when the mismatch relative difference is lower than the relative critical mismatch with the following range equal to the last range.

In an embodiment, the searching loop of the target range comprises identifying the target range with the starting range. However, the target range may also be determined directly with the last range if the mismatch relative difference is lower than the relative critical mismatch.

In an embodiment, said step of determining the mismatch of the starting range comprises repeating a searching loop of a plateau. However, the searching loop of the plateau may be implemented in any way (for example, with a binary search algorithm).

In an embodiment, the searching loop of the plateau comprises moving the working point by a plateau searching pitch in the decreasing direction of the mismatches. However, the plateau searching pitch may have any value (in both absolute and relative terms).

In an embodiment, the searching loop of the plateau comprises determining the range of the working point moved by the plateau searching pitch according to the mathematical model of the photovoltaic generator. However, the range of the working point may be determined according to any mathematical model (see above).

In an embodiment, the searching loop of the plateau is repeated until the range of the starting point moved by the plateau searching pitch is different from the starting range or an end of the operation characteristic is reached. However, the exit condition from the searching loop of the plateau may be of any type (according to its logic).

In an embodiment, said step of determining the mismatch of the starting range comprises calculating the mismatch of the starting range according to a last working point of the starting range in the searching loop of the plateau. However, the mismatch of the starting range may be determined in any way (for example, based on an average of the last two working points).

In an embodiment, each repetition of the searching loop of the plateau comprises saving an indication of a searching point corresponding to the power peak of the starting range according to a comparison between the power of the working point moved by the plateau searching pitch and the power of the searching point. However, this operation may also be omitted (for example, by performing an *ad hoc* rough search of the power peak before starting its tracking).

In an embodiment, said step of tracking the power peak of the target range comprises initializing the working point to the searching point. However, the working point may be initialized in any way (even in an arbitrary way when the power peak has not been roughly searched previously).

In an embodiment, said step of tracking the power peak of the target range comprises moving the working point by a peak tracking pitch in a peak tracking direction (with the peak tracking pitch lower than the plateau searching pitch). However, the peak tracking pitch may have any value (in terms both absolute and relative to the plateau searching pitch).

In an embodiment, said step of tracking the power peak of the target range comprises reversing the peak tracking direction according to a comparison between the power of the working point moved by the peak tracking pitch and the power of a previous version of the working point. However, the peak tracking direction may be reversed in response to different events (for example, only after this condition is fulfilled for two or more consecutive working points).

In one embodiment, said verifying the following range comprises calculating a test mismatch by increasing the mismatch of the starting range according to the relative critical mismatch corresponding to the following range. However, the test mismatch may be calculated in any way (according to the definition of the relative critical mismatch).

In an embodiment, said verifying the following range comprises controlling the photovoltaic generator to work at the working point corresponding to the test mismatch. However, the photovoltaic generator may be controlled in any way (see above).

In an embodiment, said verifying the following range comprises determining the range of the working point corresponding to the test mismatch according to the mathematical model of the photovoltaic generator. However, the range of the working point may be determined according to any mathematical model (see above).

In an embodiment, said verifying the following range comprises verifying the following range according to a comparison between the range of the working point corresponding to the test mismatch and the starting range. However, the comparison may be accomplished in any way (according to the definition of the relative critical mismatch).

In an embodiment, the method comprises calculating each relative critical mismatch of order higher than one according to the relative critical mismatch of first order and a number of the model modules. However, different empirical formulas may be used for this purpose (for example, depending on the voltage drops on the by-pass diodes as well); in any case, the possibility is not excluded of actually determining the relative critical mismatches of every order.

In an embodiment, the method comprises verifying a total triggering condition based on a variation over time of one or more verification electrical parameters of the photovoltaic generator and/or of one or more verification environmental parameters relating to the photovoltaic generator. However, the electrical parameters and the environmental parameters may be of any type and in any number (even zero in one of the two categories).

In an embodiment, the method comprises triggering said determining a starting range and said searching a target range according to the total triggering condition. However, the total triggering condition may be determined in any way (for example, by comparing the variations individually or in combination to each other with threshold values in any number and of any value); in any case, nothing prevents performing the total searching procedure of the target range periodically in an unconditional way.

In an embodiment, said step of verifying a total triggering condition comprises verifying the total triggering condition based on the variation over time of the verification electrical parameters with an electrical verification frequency. However, the electrical verification frequency may have any value.

In an embodiment, said step of verifying a total triggering condition comprises verifying the total triggering condition based on the variation over time of the verification environmental parameters with an environmental verification frequency lower than the electrical verification frequency. However, the environmental verification frequency may have any value (in terms both absolute and relative to the electrical verification frequency).

In an embodiment, the method comprises triggering said searching a target range periodically with the starting range set equal to the target range. However, this operation may be performed with any period or it may even be entirely omitted (for example, when the total searching procedure of the target range is performed periodically).

In an embodiment, the method comprises measuring at least one electrical quantity of the photovoltaic generator in one or more limit conditions for the determination of the starting range and the searching of the target range. However, the measured electrical quantities may be of any type and in any number, in relation to limit conditions of any type and number (for example, short-circuit current, open-circuit voltage or different, additional or alternative values).

In an embodiment, the method comprises estimating a junction temperature of the photovoltaic generator according to said at least one electrical quantity of the photovoltaic generator in the limit conditions. However, the junction temperature may be estimated with any formula (based on any number of such electrical quantities) and its value may be used for any purpose (for example, to send an alarm automatically based on its variation), or this operation may be completely omitted in a simplified implementation.

In an embodiment, said step of measuring at least one electrical quantity comprises controlling a first switch to short-circuit the photovoltaic generator coupled in series with a current meter, controlling a second switch to insulate the photovoltaic generator coupled in series with the current meter from an accumulation block of electric energy supplied by the photovoltaic generator and measuring a short-circuit current by means of the current meter. However, the measuring circuit may be implemented in any way (for example, with the second switch in series with the current meter) to operate with any accumulation block (for example, a capacitor or an inductor); more generally, the possibility of interrupting the operation of the photovoltaic generator to perform this measurement is not excluded in a less efficient implementation.

In an embodiment, said step of measuring at least one electrical quantity comprises controlling the first switch and the second switch to insulate the photovoltaic generator coupled in parallel with a voltage meter from the accumulation block and measuring an open-circuit voltage by means of the voltage meter. However, the measuring circuit may be implemented in any way (see above).

In an embodiment, the method comprises measuring a working current and/or a working voltage of the photovoltaic generator by controlling the first switch and the second switch to couple the photovoltaic generator, coupled in series with the current meter and coupled in parallel with the voltage meter, with the accumulation block and measuring the working current and the working voltage by means of the current meter and the voltage meter, respectively. However, there is possible to measure both the quantities or only one of them (assuming the other equal to its set value).

In an embodiment, said step of tracking the power peak of the target range comprises measuring at least one performance environmental parameter of the photovoltaic generator in response to a locking of the power peak. However, the performance environmental parameters may be of any type and in any number and the locking of the power peak may be determined in any way (for example, based on a variation over time of the working point); in any case, the environmental parameters may also be measured at other times (for example, periodically).

In an embodiment, said step of tracking the power peak of the target range comprises calculating at least one performance indicator in standard conditions of the photovoltaic generator according to the power peak, the junction temperature and said at least one performance environmental parameter. However, the performance indicators may be of any type (referred to any standard conditions) and in any number, they may be calculated with formulas of any type and used for any purpose (for example, to send an alarm automatically according to their variation); in any case, this feature may be completely omitted in a simplified implementation.

In an embodiment, the method comprises determining at least one darkness characteristic of the photovoltaic generator representative of an operation thereof in a darkness condition. However, the darkness characteristics may be determined in any number and at any time (for example, periodically).

In an embodiment, the method comprises calculating one or more modeling parameters of the mathematical model of the photovoltaic generator according to said at least one darkness characteristic. However, the modeling parameters (in any number and of any type) may be calculated from any number of darkness characteristics with formulas of any type (for example, according to their average).

In an embodiment, said at least one darkness characteristic is a plurality of darkness characteristics for different temperatures of the photovoltaic generator. However, the darkness characteristics may be associated with any values of the temperature of the photovoltaic generator (even not uniformly distributed).

In an embodiment, the method comprises calculating a reference value of the junction temperature for the calculation thereof according to the darkness characteristics. However, the reference value of the junction temperature may be calculated in any way according to any number of the darkness characteristics (for example, all or only part of them being subsampled).

In an embodiment, the method comprises determining an ideal characteristic of the photovoltaic generator representative of an operation thereof without mismatch from said at least one darkness characteristic. However, the ideal characteristic may be determined in any way from any number of darkness characteristics.

In an embodiment, the method comprises calculating the power peak of the modules without mismatch. However, the power peak may be determined in another way (for example, via a search thereof); in any case, nothing prevents repeating this operation during the searching loop of the absolute critical mismatch.

In an embodiment, the method comprises repeating a searching loop of the absolute critical mismatch. However, the absolute critical mismatch may be determined in another way (for example, acting on a different module, analytically); particularly, the absolute critical mismatch may also be determined according to the composition of the solar spectrum, either measured at the moment by means of a corresponding sensor or estimated according to the day of the year and time.

In an embodiment, the searching loop of the absolute critical mismatch comprises modifying the ideal characteristic according to an increment of the mismatch of a last one of the modules. However, the mismatch of the last module may be incremented by any value (even not constant).

In an embodiment, the searching loop of the absolute critical mismatch comprises calculating the power peak of the last module from the ideal characteristic modified according to the increase of the last module. However, the power peak may be determined in another way (see above).

In an embodiment, the searching loop of the absolute critical mismatch is repeated until the power peak of the last module reaches the power peak of the modules without mismatch. However, this condition may be verified in any way (according to the definition of the absolute critical mismatch).

In an embodiment, the method comprises setting the absolute critical mismatch according to the mismatch of the last module at the exit from the searching loop of the absolute critical mismatch. However, the absolute critical mismatch may be determined in any way (for example, based on an average of the last two mismatches of the last range).

In an embodiment, the method comprises modifying the ideal characteristic according to an arbitrary mismatch of the last module. However, the mismatch may have any arbitrary value (for example, equal to that at the exit from the searching loop of the absolute critical mismatch).

In an embodiment, the method comprises repeating a searching loop of the relative critical mismatch of first order. However, the relative critical mismatch of first order may be determined in another way (for example, by acting on different modules, analytically); particularly, the relative critical mismatch of first order may also be determined according to the composition of the solar spectrum (as above, both measured at the moment or estimated according to the day of the year and the time). In any case, the same procedure may also be used to determine the relative critical mismatch of any order.

In an embodiment, the searching loop of the relative critical mismatch of first order comprises updating the ideal characteristic according to an increase of the mismatch of a penultimate one of the modules. However, the mismatch of the penultimate module may be increased by any value (also not constant).

In an embodiment, the searching loop of the relative critical mismatch of first order comprises calculating the power peak of the penultimate module and the power peak of the last module from the ideal characteristic modified according to the increase of the penultimate module. However, these power peaks may be determined in any way (see above); in any case, it is also possible to calculate the power peak of the last module only once before performing the searching loop of the relative critical mismatch of first order (since its variation is negligible in practice).

In an embodiment, the searching loop of the relative critical mismatch of first order is repeated until the power peak of the penultimate module reaches the power peak of the last module. However, this condition may be verified in any way (according to the definition of the relative critical mismatch).

In an embodiment, the method comprises calculating the relative critical mismatch of first order according to the mismatch of the penultimate module and the mismatch of the last module at the exit from the searching loop of the relative critical mismatch of first order. However, the relative critical mismatch may be determined in any way (for example, based on an average of the last two mismatches of the penultimate range).

Generally, similar considerations apply if the same solution is implemented with an equivalent method (by using similar steps with the same functions of more steps or portions thereof, removing some steps being non-essential, or adding further optional steps); moreover, the steps may be performed in a different order, concurrently or in an interleaved way (at least in part).

An embodiment provides a software program configured for causing a computing system to perform the above-described method when the software program is executed on the computing system. An embodiment provides a software program product comprising a computer readable storage medium embodying a software program, the software program being loadable into a working memory of a computing system thereby configuring the computing system to perform the same method. However, the software program may be implemented as a stand-alone module, as a plug-in for a pre-existing software program (for example, a control program of the inverter), or even directly in the latter. In any case, similar considerations apply if the program is structured in a different way; moreover, the program may be provided in any form (for example, external or resident software, firmware or microcode, either in object code or in source code, for example, to be compiled or interpreted) and on any (tangible) computer readable storage medium that may retain and store instructions for use by the computing system. In any case, the solution according to an embodiment of the present disclosure lends itself to be implemented even with a hardware structure (for example, formed by electronic circuits integrated in one or more chips of semiconductor material), or with a combination of software and hardware suitably programmed or otherwise configured.

An embodiment provides a control system of a photovoltaic generator comprising means configured for performing the steps of the above-described method. However, these means may be implemented in any way (for example, via a dedicated controller).

An embodiment provides an interface device for interfacing a photovoltaic generator with a load thereof, wherein the interface device comprises such control system for controlling the photovoltaic generator. However, the interface device may be of any type (for example, a DC-AC or a DC-DC converter) for any load (for example, an electric network, an accumulator, one or more electricity consumers); in any case, the control system may also be implemented outside the interface device or even in its absence.

In an embodiment, the interface device is an inverter for converting direct electric energy supplied by the photovoltaic generator into alternating electric energy to be supplied to the load. However, the inverter may be of any type (for example, with a PLL to lock a mains voltage, with a booster to extend its operation range).

An embodiment provides a photovoltaic system comprising a photovoltaic generator and such a control system for controlling the photovoltaic generator. An embodiment provides a photovoltaic system comprising a photovoltaic generator and such interface device for interfacing the photovoltaic generator with a load thereof. However, the photovoltaic system may be of any type (for example, installed in a house, a factory).

Generally, similar considerations apply if the control system, the interface device and the photovoltaic system each has a different structure or comprises equivalent components (for example, of different materials), or it has other operative characteristics. In any case, every component thereof may be separated into more elements, or two or more components may be combined together into a single element; moreover, each component may be replicated to support the execution of the corresponding operations in parallel. Moreover, unless specified otherwise, any interaction between different components generally does not need to be continuous, and it may be either direct or indirect through one or more intermediaries.

**Claims**

1. A method (600,700) for controlling a photovoltaic generator (105) comprising a plurality of modules (110) adapted to contribute to a power supplied by the photovoltaic generator (105), an operation of the photovoltaic generator (105) being defined by an operation characteristic,

**characterized in that**

the operation characteristic is divided into a plurality of ranges associated with different mismatches of the modules, with the ranges ranked by an index in increasing order of the mismatches, each range being defined by a range of voltage, wherein the modules having a mismatch lower than or equal to the mismatch of the range are active and the other modules are inactive, wherein the method (600) comprises:

determining (624-632) a starting range equal to a first one of the ranges or to the range corresponding to an absolute critical mismatch of the photovoltaic generator (105), the absolute critical mismatch being defined as the mismatch of the last range making a power peak of said last range equal to the power peak of the range preceding said last range when the operation characteristic consists of two ranges;

searching (636-670) a target range among the starting range and any one of the ranges following the starting range, for each of the following ranges the target range being searched according to a comparison between a mismatch relative difference, the mismatch relative difference being a relative difference between the mismatch of the following range and the mismatch of the starting range, and a relative critical mismatch of the photovoltaic generator (105) of order equal to a difference between the index of the following range and the index of the starting range, the relative critical mismatch being defined as a relative difference between the mismatch of a first one of the ranges and the mismatch of a second one of the ranges making the power peak of the second range equal to the power peak of the first range with a difference between the index of the second range and the index of the first range equal to the order of the relative critical mismatch; and

tracking (674-688) the power peak of the target range by controlling the photovoltaic generator (105) to operate in a working point corresponding thereto.

2. The method (600,700) according to claim 1, wherein said determining (624-632) a starting range comprises:

controlling (628) the photovoltaic generator to work at the working point corresponding to the absolute critical mismatch, and

determining (630-632) the range of the working point corresponding to the absolute critical mismatch according to a mathematical model of the photovoltaic generator.

3. The method (600,700) according to claim 2, wherein the mathematical model represents a dummy photovoltaic generator with a number of dummy modules lower than a number of the modules of the photovoltaic generator and having the same operation characteristic of the photovoltaic generator.

4. The method (600,700) according to claim 2 or 3, wherein said searching (636-670) a target range comprises performing a searching loop of the target range comprising:

determining (636-648) the mismatch of the starting range,
repeating (650-668) in succession for each of the following ranges:

verifying (652-666) the following range according to a comparison of the corresponding mismatch relative difference with the corresponding relative critical mismatch, and

restarting (668) the searching loop of the target range with the starting range set equal to the following range in response to the corresponding mismatch relative difference being lower than the corresponding relative critical mismatch,

until the following range reaches the last range (650), and
identifying (670) the target range with the starting range.

5. The method (600,700) according to claim 4, wherein said determining (636-648) the mismatch of the starting range comprises:

repeating (636-646) a searching loop of a plateau comprising:

moving (636) the working point by a plateau searching pitch in the decreasing direction of the mismatches,
determining (638-644) the range of the working point moved by the plateau searching pitch according to the mathematical model of the photovoltaic generator,

until (646) the range of the starting point moved by the plateau searching pitch is different from the starting range or an end of the operation characteristic is reached, and

calculating (648) the mismatch of the starting range according to a last working point of the starting range in the searching loop of the plateau.

6. The method (600,700) according to claim 5, wherein each repetition of the searching loop of the plateau (636-646) comprises:

saving (640-642) an indication of a searching point corresponding to the power peak of the starting range according to a comparison between the power of the working point moved by the plateau searching pitch and the power of the searching point, and wherein said tracking (674-688) the power peak of the target range comprises:

initializing (674) the working point to the searching point.

7. The method (600,700) according to any claim from 4 to 6, wherein said verifying (652-666) the following range comprises:

calculating (652-654) a test mismatch by increasing the mismatch of the starting range according to the relative critical mismatch corresponding to the following range,

controlling (656) the photovoltaic generator to work at the working point corresponding to the test mismatch,

determining (658-660) the range of the working point corresponding to the test mismatch according to the mathematical model of the photovoltaic generator, and

verifying (662) the following range according to a comparison between the range of the working point corresponding to the test mismatch and the starting range.

8. The method (600,700) according to any claim from 1 to 7, comprising:

calculating (652) each relative critical mismatch of order higher than one according to the relative critical mismatch of first order and a number of the modules.

9. The method (600,700) according to any claim from 1 to 8, comprising:

verifying (602-616) a total triggering condition based on a variation over time of one or more verification electrical parameters of the photovoltaic generator and/or of one or more verification environmental parameters relating to the photovoltaic generator,

triggering (608-616) said determining (624-632) a starting range and said searching (636-670) a target range according to the total triggering condition, and

triggering (634) said searching (636-670) a target range periodically with the starting range set equal to the target range.

10. The method (600,700) according to any claim from 1 to 9, comprising:

measuring (624) at least one electrical quantity of the photovoltaic generator in one or more limit conditions for the determination of the starting range and the searching of the target range,

estimating (626) a junction temperature of the photovoltaic generator according to said at least one electrical quantity of the photovoltaic generator in the limit conditions,

measuring (686) at least one performance environmental parameter of the photovoltaic generator in response to a locking of the power peak, and

calculating (688) at least one performance indicator in standard conditions of the photovoltaic generator according to the power peak, the junction temperature and said at least one performance environmental parameter.

11. The method (600.700) according to any claim from 2 to 10, comprising:

determining (712) at least one darkness characteristic of the photovoltaic generator representative of an operation thereof in a darkness condition, and

calculating (715) one or more modeling parameters of the mathematical model of the photovoltaic generator according to said at least one darkness characteristic.

12. A software program (400) configured for causing a computing system (145) to perform the method (600,700) according to any claim from 1 to 11 when the computer program (400) is executed on the computing system (145).

**13.** A control system (145) of a photovoltaic generator (105) comprising means (400) configured for performing the steps of the method (600,700) according to any claim from 1 to 11.

**14.** An interface device (125) for interfacing a photovoltaic generator (105) with a load thereof, wherein the interface device (125) comprises the control system (145) of claim 13 for controlling the photovoltaic generator (105).

**15.** A photovoltaic system (100) comprising a photovoltaic generator (105) and the control system (145) according to claim 13 for controlling the photovoltaic generator (105).

**Patentansprüche**

**1.** Verfahren (600, 700) zum Steuern eines Photovoltaikgenerators (105), der eine Mehrzahl von Modulen (110) umfasst, die dazu ausgebildet sind, zu einer von dem Photovoltaikgenerator (105) gelieferten Leistung beizutragen, wobei ein Betrieb des Photovoltaikgenerators (105) durch eine Betriebscharakteristik definiert ist,
**dadurch gekennzeichnet, dass**
die Betriebscharakteristik in eine Mehrzahl von Bereichen unterteilt ist, die unterschiedlichen Fehlanpassungen der Module zugeordnet sind, wobei die Bereiche durch einen Index in aufsteigender Ordnung der Fehlanpassungen eingestuft sind, wobei jeder Bereich durch einen Spannungsbereich definiert ist, wobei die Module mit einer Fehlanpassung, die geringer oder gleich der Fehlanpassung des Bereichs ist, aktiv sind und die anderen Module inaktiv sind, wobei das Verfahren (600) umfasst:

Bestimmen (624-632) eines Startbereichs, der gleich einem ersten der Bereiche oder dem Bereich ist, der einer absoluten kritischen Fehlanpassung des Photovoltaikgenerators (105) entspricht, wobei die absolute kritische Fehlanpassung als die Fehlanpassung des letzten Bereichs definiert ist, wodurch eine Leistungsspitze des letzten Bereichs gleich der Leistungsspitze des Bereichs, der dem letzten Bereich vorangeht, wird, wenn die Betriebscharakteristik aus zwei Bereichen gebildet ist;
Suchen (636-670) eines Zielbereichs aus dem Startbereich und einem der auf den Startbereich folgenden Bereiche, wobei für jeden der folgenden Bereiche der Zielbereich gemäß einem Vergleich zwischen einer relativen Differenz der Fehlanpassung, wobei die relative Differenz der Fehlanpassung eine relative Differenz zwischen der Fehlanpassung des folgenden Bereichs und der Fehlanpassung des Startbereichs ist, und einer relativen kritischen Fehlanpassung des Photovoltaikgenerators (105) der Ordnung gleich einer Differenz zwischen dem Index des folgenden Bereichs und dem Index des Startbereichs, gesucht wird, wobei die relative kritische Fehlanpassung als eine relative Differenz zwischen der Fehlanpassung eines ersten der Bereiche und der Fehlanpassung eines zweiten der Bereiche definiert ist, wodurch die Leistungsspitze des zweiten Bereichs gleich der Leistungsspitze des ersten Bereichs wird, mit einer Differenz zwischen dem Index des zweiten Bereichs und dem Index des ersten Bereichs gleich der Ordnung der relativen kritischen Fehlanpassung; und
Verfolgen (674-688) der Leistungsspitze des Zielbereichs durch Steuern des Photovoltaikgenerators (105) so, dass er in einem diesem entsprechenden Arbeitspunkt arbeitet.

**2.** Verfahren (600, 700) nach Anspruch 1, wobei das Bestimmen (624-632) eines Startbereichs umfasst:

Steuern (628) des Photovoltaikgenerators so, dass er an dem Arbeitspunkt arbeitet, der der absoluten kritischen Fehlanpassung entspricht, und
Bestimmen (630-632) des Bereichs des Arbeitspunktes, der der absoluten kritischen Fehlanpassung entspricht, gemäß einem mathematischen Modell des Photovoltaikgenerators.

**3.** Verfahren (600, 700) nach Anspruch 2, wobei das mathematische Modell einen Dummy-Photovoltaikgenerator mit einer Anzahl von Dummy-Modulen, die niedriger ist als eine Anzahl der Module des Photovoltaikgenerators, darstellt, der die gleiche Betriebscharakteristik wie der Photovoltaikgenerator hat.

**4.** Verfahren (600, 700) nach Anspruch 2 oder 3, wobei das Suchen (636-670) eines Zielbereichs das Durchführen einer Suchschleife des Zielbereichs umfasst, was umfasst:

Bestimmen (636-648) der Fehlanpassung des Startbereichs,
Wiederholen (650-668) für jeden der folgenden Bereiche nacheinander:

Verifizieren (652-666) des folgenden Bereichs gemäß einem Vergleich der entsprechenden relativen Differenz der Fehlanpassung mit der entsprechenden relativen kritischen Fehlanpassung, und
Neustarten (668) der Suchschleife des Zielbereichs, wobei der Startbereich gleich dem folgenden Bereich als Reaktion darauf eingestellt wird, dass die entsprechende relative Differenz der Fehlanpassung niedriger ist als die entsprechende relative kritische Fehlanpassung,

bis der folgende Bereich den letzten Bereich (650) erreicht, und
Identifizieren (670) des Zielbereichs mit dem Startbereich.

5. Verfahren (600, 700) nach Anspruch 4, wobei das Bestimmen (636- 648) der Fehlanpassung des Startbereichs umfasst:

Wiederholen (636-646) einer Suchschleife eines Plateaus, was umfasst:

Bewegen (636) des Arbeitspunktes um einen Plateausuchabstand in die absteigende Richtung der Fehlanpassungen,
Bestimmen (638-644) des Bereichs des Arbeitspunktes, der um den Plateausuchabstand bewegt wird, gemäß dem mathematischen Modell des Photovoltaikgenerators,

bis sich (646) der Bereich des um den Plateau-Suchabstand bewegten Startpunktes von dem Startbereich unterscheidet oder ein Ende der Betriebscharakteristik erreicht ist, und
Berechnen (648) der Fehlanpassung des Startbereichs gemäß einem letzten Arbeitspunkt des Startbereichs in der Suchschleife des Plateaus.

6. Verfahren (600, 700) nach Anspruch 5, wobei jede Wiederholung der Suchschleife des Plateaus (636-646) umfasst:
Speichern (640-642) eines Hinweises auf einen Suchpunkt, der der Leistungsspitze des Startbereichs entspricht, gemäß einem Vergleich zwischen der Leistung des Arbeitspunktes, der um den Plateausuchabstand bewegt wird, und der Leistung des Suchpunktes, und wobei die Verfolgung (674-688) der Leistungsspitze des Zielbereichs umfasst:
Initialisieren (674) des Arbeitspunktes auf den Suchpunkt.

7. Verfahren (600, 700) nach einem der Ansprüche 4 bis 6, wobei das Verifizieren (652-666) des folgenden Bereichs umfasst:

Berechnen (652-654) einer Testfehlanpassung durch Erhöhen der Fehlanpassung des Startbereichs entsprechend der relativen kritischen Fehlanpassung, die dem folgenden Bereich entspricht,
Steuern (656) des Photovoltaikgenerators so, dass er an dem Arbeitspunkt arbeitet, der der Testfehlanpassung entspricht,
Bestimmen (658-660) des Bereichs des Arbeitspunktes, der der Testfehlanpassung entspricht, gemäß dem mathematischen Modell des Photovoltaikgenerators, und
Verifizieren (662) des folgenden Bereichs gemäß einem Vergleich zwischen dem Bereich des Arbeitspunktes, der der Testfehlanpassung entspricht, und dem Startbereich.

8. Verfahren (600, 700) nach einem der Ansprüche 1 bis 7, das umfasst:
Berechnen (652) jeder relativen kritischen Fehlanpassung einer Ordnung, die höher ist als eins, gemäß der relativen kritischen Fehlanpassung der ersten Ordnung und einer Anzahl der Module.

9. Verfahren (600, 700) nach einem der Ansprüche 1 bis 8, das umfasst:

Verifizieren (602-616) einer Gesamtauslösebedingung basierend auf einer Variation eines oder mehrerer elektrischer Verifizierungsparameter des Photovoltaikgenerators im Verlauf von Zeit und/oder eines oder mehrerer Verifizierungsumgebungsparameter in Bezug auf den Photovoltaikgenerator,
Auslösen (608-616) des Bestimmens (624-632) eines Startbereichs und des Suchens (636-670) eines Zielbereichs gemäß der Gesamtauslösebedingung und
periodisches Auslösen (634) des Suchens (636-670) eines Zielbereichs, wobei der Startbereich gleich dem Zielbereich eingestellt wird.

10. Verfahren (600, 700) nach einem der Ansprüche 1 bis 9, das umfasst:

Messen (624) mindestens einer elektrischen Größe des Photovoltaikgenerators unter einer oder mehreren Grenzbedingungen zum Bestimmen des Startbereichs und zum Suchen des Zielbereichs,

Schätzen (626) einer Sperrschichttemperatur des Photovoltaikgenerators gemäß der mindestens einen elektrischen Größe des Photovoltaikgenerators unter den Grenzbedingungen,

Messen (686) mindestens eines Leistungsumgebungsparameters des Photovoltaikgenerators als Reaktion auf eine Verriegelung der Leistungsspitze, und

Berechnen (688) mindestens eines Leistungsindikators unter Standardbedingungen des Photovoltaikgenerators gemäß der Leistungsspitze, der Sperrschichttemperatur und dem mindestens einen Leistungsumgebungsparameter.

**11.** Verfahren (600, 700) nach einem der Ansprüche 2 bis 10, das umfasst:

Bestimmen (712) mindestens einer Dunkelheitscharakteristik des Photovoltaikgenerators, die für einen Betrieb davon in einem Dunkelzustand repräsentativ ist, und

Berechnen (715) eines oder mehrerer Modellierungsparameter des mathematischen Modells des Photovoltaikgenerators gemäß der mindestens einen Dunkelheitscharakteristik.

**12.** Softwareprogramm (400), das dazu ausgelegt ist, zu bewirken, dass ein Computersystem (145) das Verfahren (600, 700) nach einem der Ansprüche 1 bis 11 ausführt, wenn das Computerprogramm (400) auf dem Computersystem (145) ausgeführt wird.

**13.** Steuersystem (145) eines Photovoltaikgenerators (105), das eine Einrichtung (400) umfasst, die zum Ausführen der Schritte des Verfahrens (600, 700) nach einem der Ansprüche 1 bis 11 ausgelegt ist.

**14.** Schnittstellenvorrichtung (125) zum Bilden einer Schnittstelle eines Photovoltaikgenerators (105) mit einer Last davon, wobei die Schnittstellenvorrichtung (125) das Steuersystem (145) nach Anspruch 13 zum Steuern des Photovoltaikgenerators (105) umfasst.

**15.** Photovoltaiksystem (100), das einen Photovoltaikgenerator (105) und das Steuersystem (145) nach Anspruch 13 zum Steuern des Photovoltaikgenerators (105) umfasst.

**Revendications**

**1.** Un procédé (600, 700) pour commander un générateur photovoltaïque (105) comprenant une pluralité de modules (110) adaptés pour contribuer à une puissance fournie par le générateur photovoltaïque (105), un fonctionnement du générateur photovoltaïque (105) étant défini par une caractéristique de fonctionnement,
**caractérisé en ce que**
la caractéristique de fonctionnement est divisée dans une pluralité d'intervalles associés à de différents désalignements des modules, les intervalles étant rangés par un index par ordre croissant du désalignement, chaque intervalle étant défini par une intervalle de tension, dans lequel les modules ayant un désalignement inférieur ou égal au désalignement de l'intervalle sont actifs et les autres modules sont inactifs, où le procédé (600) comprend:

déterminer (624-632) un intervalle de départ égal à un premier des intervalles ou à l'intervalle correspondant à un désalignement critique absolu du générateur photovoltaïque (105), le désalignement critique absolu étant défini comme le désalignement du dernier intervalle qui rend un pic de puissance du ledit dernier intervalle égal au pic de puissance de l'intervalle précédent ledit dernier intervalle lorsque la caractéristique de fonctionnement est composée de deux intervalles;
rechercher (636-670) un intervalle objectif entre l'intervalle de départ et l'un quelconque des intervalles suivant l'intervalle de départ, pour chacun des intervalles suivant l'intervalle objectif étant recherché selon une comparaison entre une différence relative des désalignements, la différence relative des désalignements étant une différence relative entre le désalignement de l'intervalle suivant et le désalignement de l'intervalle de départ, et un désalignement critique relatif du générateur photovoltaïque (105) d'ordre égal à une différence entre l'index de l'intervalle suivant et l'index de l'intervalle de départ, le désalignement critique relatif étant défini comme une différence relative entre le désalignement d'un premier des intervalles et le désalignement d'un second des intervalles rendant le pic de puissance du second intervalle égal au pic de puissance du premier intervalle avec une différence entre l'index du second intervalle et l'index du premier intervalle égal à l'ordre du désalignement critique relatif; et

suivre (674-688) le pic de puissance de l'intervalle objectif en commandant le générateur photovoltaïque (105) pour fonctionner à un point de fonctionnement correspondant de celui-ci.

2. Le procédé (600, 700) selon la revendication 1, dans lequel ledit déterminer (624-632) un intervalle de départ comprend:

commander (628) le générateur photovoltaïque pour fonctionner au point de fonctionnement correspondant au désalignement critique absolu, et
déterminer (630-632) l'intervalle du point de fonctionnement correspondant au désalignement critique absolu selon un modèle mathématique du générateur photovoltaïque.

3. Le procédé (600, 700) selon la revendication 2, dans lequel le modèle mathématique représente un générateur photovoltaïque fictif avec un nombre de modules fictifs inférieur à un nombre de modules du générateur photovoltaïque et ayant la même caractéristique de fonctionnement que le générateur photovoltaïque.

4. Le procédé (600 700) selon la revendication 2 ou 3, dans lequel ledit rechercher (636-670) un intervalle objectif comprend l'exécution d'un cycle de recherche de l'intervalle objectif comprenant:

déterminer (636-648) le désalignement de l'intervalle de départ,
répéter (650-668) successivement pour chacun des intervalles suivants:

vérifier (652-666) l'intervalle suivant selon une comparaison de la différence relative correspondant des désalignements avec le désalignement critique relatif correspondant, et
recommencer (668) le cycle de recherche de l'intervalle objectif avec l'intervalle de départ mis égal à l'intervalle suivant en réponse à la différence relative correspondant des désalignements inférieur au désalignement critique relatif correspondant,

jusqu'à ce que l'intervalle suivant atteint le dernier intervalle (650), et
identifier (670) l'intervalle objectif dans l'intervalle de départ.

5. Le procédé (600, 700) selon la revendication 4, dans lequel ledit déterminer (636-648) le désalignement de l'intervalle de départ comprend:

répéter (636-646) un cycle de recherche d'un plateau comprenant:

déplacer (636) le point de fonctionnement d'un pas de recherche du plateau dans la direction décroissante des désalignements,
déterminer (638-644) l'intervalle du point de fonctionnement déplacé par l'étape de recherche du plateau selon le modèle mathématique du générateur photovoltaïque,

jusqu'à ce que (646) l'intervalle du point de fonctionnement déplacé par l'étape de recherche du plateau est différente de l'intervalle de départ ou une fin de la caractéristique de fonctionnement est atteinte, et
calculer (648) le désalignement de l'intervalle de départ selon un dernier point de fonctionnement de l'intervalle de départ dans le cycle de recherche du plateau.

6. Le procédé (600 700) selon la revendication 5, dans lequel chaque répétition du cycle de recherche du plateau (636-646) comprend:
enregistrer (640-642) une indication d'un point de recherche correspondant au pic de puissance de l'intervalle de départ selon une comparaison entre la puissance du point de fonctionnement déplacé du pas de recherche du plateau et la puissance du point de recherche,
et dans lequel ledit suivre (674-688) le pic de puissance de l'intervalle objectif comprend:
initialiser (674) le point de fonctionnement au point de recherche.

7. Le procédé (600, 700) selon l'une quelconque des revendications 4 à 6, dans lequel ledit vérifier (652-666) l'intervalle suivant comprend:

calculer (652-654) un désalignement de test en augmentant le désalignement de l'intervalle de départ selon le désalignement critique relatif correspondant à l'intervalle suivant,

commander (656) le générateur photovoltaïque pour fonctionner au point de fonctionnement correspondant au désalignement de test,

déterminer (658-660) l'intervalle du point de fonctionnement correspondant au désalignement de test selon le modèle mathématique du générateur photovoltaïque, et

vérifier (662) l'intervalle suivant selon une comparaison entre l'intervalle du point de fonctionnement correspondant au désalignement de test et l'intervalle de départ.

8. Le procédé (600, 700) selon l'une quelconque des revendications 1 à 7, comprenant:
calculer (652) chaque désalignement critique relatif d'un ordre supérieur à un, selon le désalignement critique relatif du premier ordre et un nombre des modules.

9. Le procédé (600, 700) selon l'une quelconque des revendications 1 à 8, comprenant:

vérifier (602-616) une condition de déclenchement totale basée sur une variation dans le temps d'un ou plusieurs paramètres électriques de vérification du générateur photovoltaïque et/ou d'un ou plusieurs paramètres environnementaux de vérification relatifs au générateur photovoltaïque,

déclencher (608, 616) ledit déterminer (624-632) un intervalle de départ et ledit rechercher (636-670) un intervalle objectif selon la condition de déclenchement total, et

déclencher (634) périodiquement ledit rechercher (636-670) un intervalle objectif avec l'intervalle de départ mis égal à l'intervalle objectif.

10. Le procédé (600, 700) selon l'une quelconque des revendications 1 à 9, comprenant:

mesurer (624) au moins une quantité électrique du générateur photovoltaïque dans une ou plusieurs conditions limites pour la détermination de l'intervalle de départ et la recherche de l'intervalle objectif,

estimer (626) une température de jonction du générateur photovoltaïque selon ladite au moins une quantité électrique du générateur photovoltaïque dans les conditions limites,

mesurer (686) au moins un paramètre environnemental de performance du générateur photovoltaïque en réponse à un verrouillage du pic de puissance, et

calculer (688) au moins un indicateur de performance dans des conditions standard du générateur photovoltaïque selon le pic de puissance, la température de jonction et ledit au moins un paramètre environnemental de performance.

11. Le procédé (600, 700) selon l'une quelconque des revendications de 2 à 10, comprenant:

déterminer (712) au moins une caractéristique d'obscurité du générateur photovoltaïque représentative de son fonctionnement dans une condition d'obscurité, et

calculer (715) un ou plusieurs paramètres de modélisation du modèle mathématique du générateur photovoltaïque selon ladite au moins une caractéristique d'obscurité.

12. Un programme d'ordinateur (400) configuré pour causer un système d'ordinateur (145) à mettre en oeuvre le procédé (600, 700) selon l'une quelconque des revendications 1 à 11 lorsque le programme d'ordinateur (400) est exécuté sur le système d'ordinateur (145).

13. Un système de commande (145) d'un générateur photovoltaïque (105) comprenant des moyens (400) configurés pour exécuter les étapes du procédé (600, 700) selon l'une quelconque des revendications 1 à 11.

14. Un dispositif d'interface (125) pour interfacer un générateur photovoltaïque (105) avec un son charge, dans lequel le dispositif d'interface (125) comprend le système de commande (145) selon la revendication 13 pour commander le générateur photovoltaïque (105).

15. Un système photovoltaïque (100) comprenant un générateur photovoltaïque (105) et le système de commande (145) selon la revendication 13 pour commander le générateur photovoltaïque (105).

FIG.1

FIG.2A

FIG.2B

FIG.2C

FIG.2D

FIG.2E

FIG.2F

FIG.2G

FIG.2H

FIG.3

FIG.4

FIG.5

Electrical period 602 - - - → Iw,Vw,Pw 604

Variations 606

608 [Not] [>threshold]

610 [No]

[env. period]

612 DMIw,CMIw

Variations 614

[Not] 616

[>threshold]

Activation 622 - - - → Isc,Voc 624

Tj 626

Ica 628

Vw,Pw 630

CR$_{start}$ 632

A

600

FIG.6A

A

Partial triggering

634

Iw+ΔIm — 636

Vw,Pw — 638

640

[Pw≤Psearch]  [Pw>Psearch]

Save — 642

CRw — 644

646 — [Not]

[Exit]

648 — $M_{start}$

650

[start=N]  [start<N]

Mrc(d) — 652

Mtest — 654

Iw=Itest — 656

Vw — 658

CRw — 660

B  C  D  E

# FIG.6B

FIG.6C

700

703 —| Time ⟩------▶⟨ Tback ⟩
706

[No]   [|Tback-Tprec|>soglia]

709

| Darkness curve |— 712

| Parameters |— 715

| Ideal curve |— 718

| Peak |— 721

| $M_N+\Delta Mca$ |— 724

| $Im_N$ |— 727

| Update curve |— 730

| $P_N$ |— 733

736   $[P_N{\geq}P_{N-1}]$

$[P_N{<}P_{N-1}]$

739 —| Mca |

( A )          ( B )

# FIG.7A

A

B

$M_N$ — 742

$M_{N-1} + \Delta Mcr$ — 745

$Im_{N-1}$ — 748

Update curve — 751

$P_{N-1}, P_N$ — 754

757 — $[P_{N-1} > P_N]$

$[P_{N-1} \leq P_N]$

Mcr(1) — 760

FIG.7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5869956 A